(19) Europäisches Patentamt / European Patent Office / Office européen des brevets

(11) **EP 2 786 096 B1**

(12) **EUROPÄISCHE PATENTSCHRIFT**

(45) Veröffentlichungstag und Bekanntmachung des Hinweises auf die Patenterteilung:
**20.01.2016 Patentblatt 2016/03**

(21) Anmeldenummer: **12780654.5**

(22) Anmeldetag: **15.10.2012**

(51) Int Cl.:
**G01C 19/5776** *(2012.01)*

(86) Internationale Anmeldenummer:
**PCT/EP2012/004307**

(87) Internationale Veröffentlichungsnummer:
**WO 2013/079139 (06.06.2013 Gazette 2013/23)**

(54) **REGELUNGSVORRICHTUNG, DREHRATENSENSOR UND VERFAHREN ZUM BETRIEB EINER REGELUNGSVORRICHTUNG MIT HARMONISCHEM SOLLWERTSIGNAL**

REGULATING DEVICE, ROTATION RATE SENSOR AND METHOD FOR OPERATING A REGULATING DEVICE WITH HARMONIC DESIRED VALUE SIGNAL

DISPOSITIF DE RÉGULATION, CAPTEUR DE VITESSE DE ROTATION ET PROCÉDÉ PERMETTANT DE FAIRE FONCTIONNER UN DISPOSITIF DE RÉGULATION AU MOYEN D'UN SIGNAL HARMONIQUE DE VALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2011 DE 102011119949**

(43) Veröffentlichungstag der Anmeldung:
**08.10.2014 Patentblatt 2014/41**

(73) Patentinhaber: **Northrop Grumman LITEF GmbH 79115 Freiburg (DE)**

(72) Erfinder: **RUF, Markus 79183 Waldkirch (DE)**

(74) Vertreter: **Müller Hoffmann & Partner Patentanwälte mbB St.-Martin-Strasse 58 81541 München (DE)**

(56) Entgegenhaltungen:
**EP-A1- 2 336 717**

EP 2 786 096 B1

**Beschreibung**

Die Erfindung bezieht sich auf eine Regelungsvorrichtung, insbesondere einer Drehratensensoreinrichtung, mit harmonischer Führungsgröße bzw. mit harmonischem Sollwertsignal. Die Erfindung bezieht sich weiter auf ein Verfahren zum Betrieb einer Regelungsvorrichtung mit harmonischer Führungsgröße.

Übliche Regelungsmethodiken sind auf Regelungsprobleme mit konstanter oder sich nur langsam ändernder Führungsgröße zugeschnitten, wobei der Wert einer von einer Störgröße beeinflussten Regelgröße möglichst nahe bei einem vorgegebenen Sollwert gehalten wird, bzw. möglichst nahe einem sich ändernden Sollwert nachgeführt wird. Manche Anwendungen, zum Beispiel mikromechanische Drehratensensoren zur Auswertung einer Corioliskraft, sehen die Anregung eines Schwingers mit seiner Resonanzfrequenz und mit einer definierten Schwingungsamplitude durch einen Regelkreis vor. Ein Regler regelt dabei das von ihm erzeugte Kraftsignal derart, dass die Differenz zwischen einem vorgegebenen harmonischen Sollsignal und gemessener Schwingerbewegung verschwindet.

Üblicherweise wird dabei ein Messsignal, das die Bewegung eines Schwingers entlang einer Anregungsrichtung abbildet, zunächst einem Demodulator zugeführt. Der Demodulator multipliziert das Messsignal mit einem harmonischen Signal mit einer Kreisfrequenz wd, die der Resonanzkreisfrequenz $\omega_0$ des Schwingers entspricht. Die Regelung selbst erfolgt mit einem konstanten, jedenfalls von der Resonanzkreisfrequenz unabhängigen Sollwertsignal im Basisband. Das Ausgangssignal des Reglers wird dann in einem Modulator wieder auf ein harmonisches Signal mit einer Kreisfrequenz $\omega_m$, die der Resonanzkreisfrequenz $\omega_0$ des Schwingers entspricht, aufmoduliert. Das Modulationsprodukt wird mit dem vorgegebenen Sollsignal verglichen. Die Differenz dieser beiden Signale steuert schließlich einen Aktuator, der anhand des Reglersignals eine Kraft auf den Schwinger so ausübt, dass dieser gemäß der vorgegebenen Sollschwingung schwingt. Da die Regelung im Basisband erfolgt filtert nach dem Modulator ein Tiefpassfilter die Mischprodukte, insbesondere bei der doppelten Resonanzfrequenz, wodurch allerdings die Bandbreite des Reglers und damit dessen Reaktionsgeschwindigkeit auf Änderungen der Auslenkung begrenzt wird.

Dokument EP 2 336 717 offenbart den Oberbegriff der unabhängigen Ansprüche.

In der zum Anmeldezeitpunkt noch nicht veröffentlichten deutschen Patentanmeldung DE 102010055631.9 wird eine Regelung mit einem harmonischem Sollwertsignal im Frequenzband der Resonanzkreisfrequenz $\omega_0$ des Schwingers beschrieben.

In vielen Anwendungsbereichen schwingt der Schwinger nach Abschalten des Antriebs mit abklingender Amplitude weiter. Wird die Regelung in einer Abklingphase des Schwingers aktiviert, so hängt die Inbetriebnahmezeit von der Phasen- und Amplitudendifferenz zwischen der abklingenden Schwingung und dem Sollwertsignal ab.

Aufgabe der Erfindung ist ein Reglerkonzept zur Verbesserung des Einschaltverhaltens einer Regelungsvorrichtung für eine harmonische Führungsgröße. Die Aufgabe wird mit dem Gegenstand der unabhängigen Ansprüche gelöst. Vorteilhafte Weiterbildungen ergeben sich aus den Jeweiligen Unteransprüchen.

Im Nachfolgenden werden anhand der Figuren Ausführungsformen der Erfindung, deren Funktionsweise sowie deren Vorteile beschrieben. Elemente der Ausführungsformen sind untereinander kombinierbar, sofern sie sich nicht ausschließen.

Die Figur 1 zeigt ein schematisches Blockschaltbild einer Vorrichtung mit einer Regelungsvorrichtung gemäß einer Ausführungsform der Erfindung, die eine Regler-Haupteinheit zur Steuerung einer harmonischen Schwingung auf Grundlage eines harmonischen Sollwertsignals und eine Regler-Erweiterungseinheit zur Synchronisation des harmonischen Sollwertsignals umfasst.

Die Figur 2A zeigt ein vereinfachtes Blockschaltbild mit Einzelheiten der Regler-Erweiterungseinheit der Figur 1 gemäß einer weiteren Ausführungsform.

Die Figur 2B zeigt ein Blockschaltblid mit weiteren Einzelheiten der Regler-Erweiterungseinheit nach Figur 2A gemäß einer weiteren Ausführungsform.

Die Figur 3A zeigt ein schematisches Blockschaltbild einer Vorrichtung mit einer Regelungsvorrichtung gemäß einer Ausführungsform, die sich auf eine Regler-Haupteinheit mit einem kontinuierlichen PI-Regler für harmonische Sollwertsignale und einem Totzeitglied bezieht.

Die Figur 3B zeigt schematisch die Übertragungsfunktion des PI-Reglers nach Figur 3A.

Die Figur 4A zeigt ein schematisches Blockschaltbild einer Vorrichtung mit einer Regelungsvorrichtung gemäß einer Ausführungsform, die sich auf eine Regler-Haupteinheit mit einem diskreten PI-Regler für harmonische Sollwertsignale und einem Totzeitglied bezieht.

Die Figur 4B illustriert schematisch die Übertragungsfunktion der Regler-Haupteinheit in Figur 4A.

Die Figur 5A zeigt ein schematisches Blockschaltbild einer Vorrichtung mit einer Regelungsvorrichtung gemäß einer Ausführungsform, die sich auf eine Regler-Haupteinheit mit einem diskreten PI-Regler für harmonische Sollwertsignale und eine ähnlich einem Bandpass wirkende Reglerergänzung bezieht.

Die Figur 5B zeigt schematisch die Übertragungsfunktion der Reglerergänzung nach Figur 5A.

Die Figur 6A ist eine schematische Draufsicht auf den mikromechanischen Teil eines Drehratensensors gemäß einer weiteren Ausführungsform der Erfindung.

Die Figur 6B ist eine schematische Querschnittsdarstellung des mikromechanischen Teils des Drehratensensors der Figur 6A.

Die Figur 6C ist ein schematisches Blockschaltbild des Drehratensensors gemäß der Figuren 6A und 6B.

Die Figur 7 ist eine schematische Draufsicht auf den mikromechanischen Teil eines Drehratensensors gemäß einer weiteren Ausführungsform der Erfindung.

Die Figur 8 zeigt ein vereinfachtes Flussdiagramm für ein Verfahren zum Betrieb einer Reglervorrichtung.

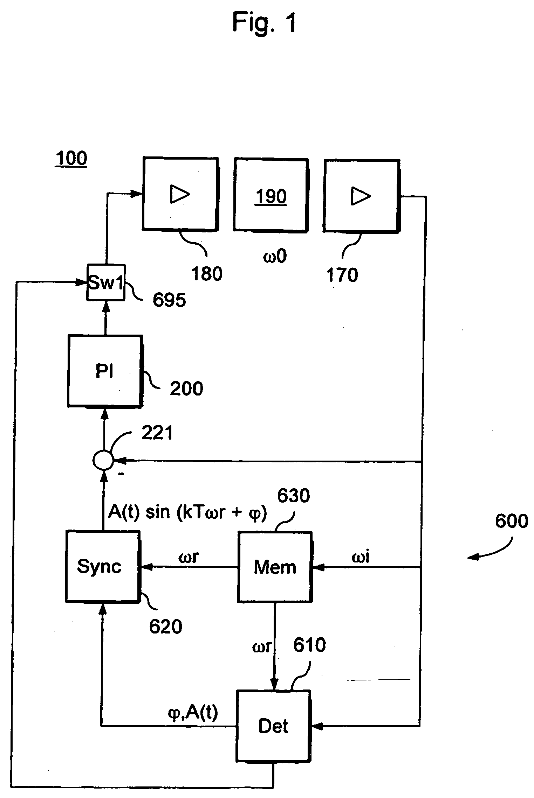

Die in der Figur 1 gezeigte Vorrichtung 100 umfasst einen Schwinger 190 und eine Regelungsvorrichtung mit einer Regler-Haupteinheit 200 und einer Regler-Erweiterungseinheit 600. Der Schwinger 190 ist eine Masse, die entlang einer Anregungsrichtung beweglich aufgehängt ist und entlang der Anregungsrichtung mit einer Resonanzfrequenz ω0 zu schwingen vermag. Im stationären Fall führt der Schwinger 190 eine translatorische oder rotatorische Schwingung der Resonanzkreisfrequenz ω0 aus. Gemäß einer Ausführungsform ist der Schwinger 190 eine Anregungseinheit, eine Coriliseinheit oder eine Detektionseinheit eines Drehratensensors. Der Drehratensensor kann beispielsweise als MEMS (microelectromechanical system) aufgebaut sein.

Eine Sensoreinheit 170 erfasst die Bewegung des Schwingers 190 und gibt ein Messsignal aus, das die gesamte Auslenkung des Schwingers 190 entlang einer Anregungsrichtung abbildet. Das Messsignal entspricht einem Reglereingangssignal für die Regler-Haupteinheit 200. Die Regler-Haupteinheit 200 vergleicht das Reglereingangssignal mit einem von der Regler-Erweiterungseinheit 600 ausgegebenen harmonischen Sollwertsignal und bildet auf der Basis der Signaldifferenz ein Reglerausgangssignal, das an eine Aktuatoreinheit 180 ausgegeben wird. Die Regler-Haupteinheit 200 bestimmt das Reglerausgangssignal derart, dass die Aktuatoreinheit 180 ein Kraftsignal erzeugt, so dass die Differenz zwischen vorgegebenem harmonischen Sollsignal und gemessener Schwingerbewegung 190 verschwindet.

Gemäß einer Ausführungsform umfasst die Regler-Erweiterungseinheit 600 eine Aktuator-Aktivierungseinheit 695 über die die Aktuatoreinhelt 180 aktivierbar ist. Im Blockschaltbild der Figur 1 wird die Aktuator-Aktivierungseinheit 695 als Schalter in der Zuführung des Reglerausgangssignals zur Aktuatoreinheit 180 gezeigt, wobei der Schalter durch ein Ausgangssignal der Regler-Erweiterungseinheit 600 steuerbar ist.

Die Regler-Erweiterungseinheit 600 wird mit der Regelungsvorrichtung aktiviert, etwa durch das Einschalten einer Betriebsspannung. Die Aktuatuoreinheit 180 bleibt zunächst deaktiviert. Abhängig von der Vorgeschichte ist der Schwinger 190 in Ruhe oder führt bei deaktivierter Aktuatoreinheit 180 eine Restschwingung aus. Die Regler-Erweiterungseinheit 600 bestimmt noch bei deaktivierter Aktuatoreinheit 180 aus dem Messsignal eine Ist-Phase und eine Ist-Amplitude einer solchen Restschwingung des Schwingers 190 und gibt ein an die Ist-Phase und die Ist-Amplitude angepasstes, synchronisiertes harmonisches Sollwertsignal an die Regler-Haupteinheit 200 aus. Sobald das harmonische Sollwertsignal, bzw. das daraus abgeleitete synchronisierte Steuersignal zur Verfügung steht, aktiviert die Regler-Erweiterungseinheit 600 die Aktuatoreinheit 180 über die Aktuator-Aktivierungseinheit 695 derart, dass die Amplitude der Restschwingung des Schwingers 190 phasensynchron bis zur Soll-Amplitude verstärkt und dabei in der Restschwingung enthaltene Energie ausgenutzt wird.

Die Regler-Erweiterungseinheit 600 erlaubt es, den Schwinger aus allen denkbaren Anfangszuständen heraus in sehr kurzer Zeit auf seine Soll-Amplitude zu regeln und dort zu halten. Zu einer Restschwingung kommt es insbesondere dann, wenn der Schwinger 190 nach Deaktivierung des Antriebs bzw. der Aktuatoreinheit 180 zu einem beliebigen Zeitpunkt innerhalb der Abklingzeit wieder zur Soll-Amplitude zum Schwingen gebracht werden soll.

Gemäß einer Ausführungsform sind die Regelungsvorrichtung 200. 600 und der Schwinger 190 Bestandteil eines Drehratensensors eines Navigationsinstrumentes, insbesondere eines Navigationsinstrumentes für ein Luftfahrtzeug, das nach einem kurzzeitigen Stromausfall in möglichst rascher Zeit wieder in einen ungestörten Betriebszustand übergeführt werden muss. Die Regler-Erweiterungseinheit 600 schätzt Amplitude und Phasenlage der vorhandenen, abklingenden Restschwingung des Schwingers 190.

Gemäß einer Ausführungsform weist die Regler-Erweiterungseinheit 600 ein Kalman-Filter zur Schätzung von Amplitude und Phasenlage auf. Aus der Amplitude und Phasenlage der Restschwingung werden unter Berücksichtigung interner Signallaufzeiten sowohl Startphase als auch Startamplitude für ein phasen- und amplitudenrichtiges Zuschalten des harmonischen Sollwertsignals abgeleitet. Die vorhandene Restschwingung wird ausgenutzt, so dass die Dauer einer Wiederinbetriebnahme nach kurzzeitigem Ausschalten verkürzt ist. Je größer die Amplitude der noch vorhanden Restschwingung ist, desto weniger Zeit wird benötigt, um den Schwinger wieder mit der Sollamplitude schwingen zu lassen. Damit reduziert sich insbesondere nach kurzen Ausfällen der Stromversorgung die Wiederinbetriebnahmezeit (Hochlaufzeit) eines die Regelungsvorrichtung 200, 600 umfassenden Systems.

Gemäß der in der Figur 1 dargestellten Ausführungsform umfasst die Regler-Erweiterungseinheit 600 eine Erfassungseinheit 610 und eine Synchronisiereinheit 620. Die Erfassungseinheit 610 bestimmt aus dem Messsignal die Ist-Phase und die Ist-Amplitude der Restschwingung des Schwingers 190 zumindest in einer Startphase der Vorrichtung 100. beispielsweise nach Wiedereinschalten der Betriebsspannung. Aus der Ist-Phase und der Ist-Amplitude sowie weiteren Systemparametern, bspw. Signallaufzeiten und Signalverzögerungszeiten, ermittelt die Erfassungseinheit 610 eine Synchronisationsinformation, die Phase und Amplitude des von der Synchronisiereinheit 620 erzeugten harmonischen Sollwertsignals vorgibt. Die Synchronistereinheit 620 empfängt die Synchronisationsinformation und gibt das durch die Synchronisationsinformation bestimmte harmonische Sollwertsignal an die Regler-Haupteinheit 200 weiter. Beispielsweise weist die Regler-Haupteinheit 200 eine Summationseinheit 221 auf, die aus dem von der Synchronisationseinheit 620 ausgegebenen harmonischen Sollwertsignal und dem Messsignal ein Differenzsignal bildet.

Gemäß einer Ausführungsform ist die Resonanzkreisfrequenz ωr des harmonischen Sollwertsignals durch die Resonanzkreisfrequenz ω0 des Schwingers 190 vorgegeben, wobei diese Frequenz auch als Startwert in die Schätzung für die Ist-Phase und die Ist-Amplitude eingeht. Gemäß einer anderen Ausführungsform umfasst die Regler-Ergänzungseinheit 600 eine Temperaturerfassungseinheit, wobei die Erfassungseinheit 610 der Schätzung von Ist-Phase und Ist-Amplitude eine temperaturkorrigierte Resonanzkreisfrequenz des Schwingers 190 zugrunde legt und das harmonische Sollwertsignal mit der temperaturkorrigierten Resonanzkreisfrequenz schwingt.

Gemäß der in der Figur 1 dargestellten Ausführungsform umfasst die Regler-Erweiterungseinheit 600 eine Frequenzspeichereinheit 630. die eine die aktuelle Schwingfrequenz des Schwingers 190 beschreibende Frequenzinformation in zeitlichen Abständen abspeichert. Gemäß einer Ausführungsform speichert die Frequenzspeichereinheit 630 die momentane Resonanzkreisfrequenz periodisch in einem nichtflüchtigen Speicher ab. Beispielsweise ist die Aktualisierungsfrequenz so gewählt, dass anwendungstypischen Temperaturänderungen gefolgt werden kann. Nach einer Ausführungsform ist die Aktualisierungsfrequenz im Bereich von 1 Hz bis 100 Hz, beispielsweise etwa 10 Hz.

Die Regler-Ergänzungseinheit 600 ruft die Frequenzinformation zur Schätzung der Ist-Phase und der Ist-Amplitude der Restschwingung des Schwingers 190 ab und/oder verwendet die dort gespeichert Frequenzinformation zur Generierung des harmonischen Sollwertsignals, beispielsweise zur Steuerung eines das Sollwertsignal erzeugenden Oszillators. In den für das Wiedereinschalten relevanten Zeiträumen, das heißt innerhalb der Abklingzeiten der Schwingung des Schwingers 190 ändert sich die Temperatur und damit die Resonanzkreisfrequenz des Schwingers 190 kaum, so dass der letzte im laufenden Betrieb in einen nichtflüchtigen Speicher abgespeicherte Wert für die Antriebsfrequenz nach einem Neustart einen ausreichend guten Näherungswert für die tatsächliche Resonanzkreisfrequenz des Schwingers 190 darstellt und als Startwert für die Regelung genutzt werden kann. Beispielsweise weisen Schwinger in mikromechanischen Drehratensensoren Zeitkonstanten im Bereich von 10 s auf. Nach Abschalten der Kraftanregung, beispielsweise nach Verlust der Betriebsspannung, schwingt der Schwinger nach etwa 30 s immer noch mit etwa 5% der Soll-Amplitude.

Gemäß einer Ausführungsform steuert eine Ablaufsteuerung der Erfassungseinheit 610 die Aktuator-Aktivierungseinheit 695 derart, dass die Aktuatoreinheit 180 erst dann aktiviert wird, wenn die Regler-Ergänzungseinheit 600 ein phasen- und amplitudensynchrones harmonisches Sollwertsignal ausgibt. Nach einer Ausführungsform ist die Aktuator-Aktivierungseinheit 695 eine Schalteinrichtung, beispielsweise ein digitaler Schalter, die der Aktuatoreinheit 180 das Reglerausgangssignal der Regler-Haupteinheit 200 erst dann zur Verfügung stellt, wenn dieser ein phasen- und amplitudenrichtiges harmonisches Sollwertsignal zur Verfügung steht.

Nach einer weiteren Ausführungsform deaktiviert die Erfassungseinheit 610 spätestens nach Ermittlung der Synchronisationsinformation solche Telleinheiten der Regler-Ergänzungseinheit 600, die nicht mehr benötigt werden.

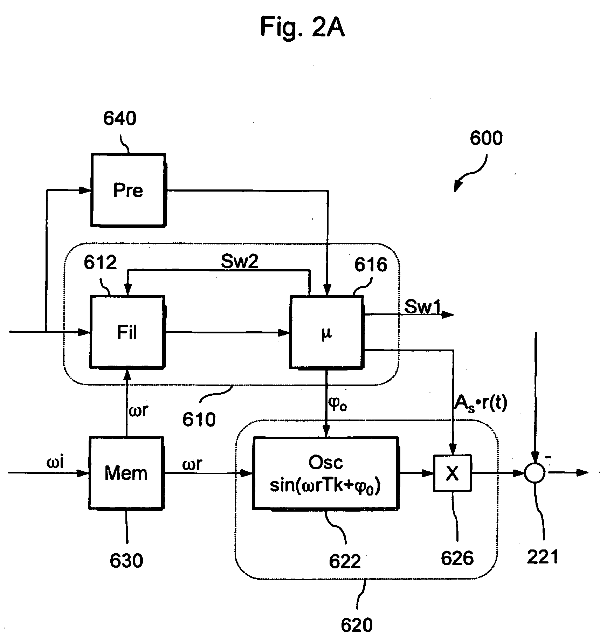

Die Figur 2A zeigt Einzelheiten der Erfassungseinheit 610. Gemäß einer Ausführungsform umfasst die Erfassungseinheit 610 eine Filtereinheit 612. Beispielsweise wird ein analoges Messsignal mit einer Abtastzelt T abgetastet und dabei in ein digitales Messsignal umgewandelt. Die Filtereinheit 612 schätzt aus den Abtastwerten des Messsignals, einem Schätzwert für die Varianz eines im Messsignal enthaltenen Messrauschens und einem Schätzwert für einen konstanten Amplituden-Offset des Messsignals Schätzwerte für einen Zeitverlauf der Restschwingung, beispielsweise die erwarteten Nulldurchgänge. Gemäß einer Ausführungsform nutzt die Filtereinheit 612 dabei Frequenzinformation, die beispielsweise aus der Frequenzspeichereinheit 630 ausgelesen wird. Eine Steuereinheit 616 ermittelt aus den Schätzwerten für den Zeitverlauf der Restschwingung die auf der Ist-Phase und der Ist-Amplitude beruhende Synchronisationsinformation. Dabei berücksichtigt die Steuereinheit 616 die aus der Filterung, der erforderlichen Berechnungen und Einschwingverzögerungen resultierende Verzögerung. Die Steuereinheit 616 berechnet die Startphase $\varphi_0$ und den Startwert $A_S$ für die Amplitude des harmonischen Sollwertsignals und den Zeitpunkt $t_0$, zu dem das so berechnete harmonische Sollwertsignal phasengleich mit der tatsächlichen Schwingung des Schwingers 190 ist.

Die Synchronisiereinheit 620 umfasst beispielsweise einen steuerbaren Schwingkreis 622, dessen Phase steuerbar Ist. Nach einer Ausführungsform ist auch die Frequenz des Oszillators steuerbar. Beispielsweise ist die Frequenz des Oszillators temperaturgesteuert, so dass einer temperaturabhängigen Änderung der harmonischen Resonanzkreisfrequenz des Schwingers 190 gefolgt werden kann. Nach einer anderen Ausführungsform wird die Resonanzkreisfrequenz ωr des Schwingkreises 622 durch den letzten Eintrag in der Frequenzspeichereinheit 630 vorgegeben. Die Information über die letzte abgespeicherte Frequenz kann dem Schwingkreis 622 entweder direkt aus der Frequenzspeichereinheit 630 oder über die Steuereinheit 616 zugeführt werden.

Die Amplitude des harmonischen Sollwertsignals wird so gesteuert, dass sie gemäß einer Zeitfunktion r(t) ausgehend von einem Anfangs-Amplitudenwert $A_S$ entsprechend der geschätzten Ist-Amplitude der Schwingung des Schwingers 190 auf den Sollwert der Amplitude der harmonischen Schwingung des Schwingers 190 hochgefahren wird. Beispielsweise gibt dazu die Steuereinheit 616 ein Rampensignal mit dem Anfangswert der geschätzten Ist-Amplitude und dem Endwert der Sollwert-Amplitude aus, dessen Zeltverlauf und/oder Zeitkonstante an die Ist-Phase angepasst ist.

Eine Multiplikatoreinheit 626 multipliziert das Amplitudensignal $A_S \cdot r(t)$ mit dem Ausgangssignal des Schwingkreises 622. Am Summationspunkt 221 wird die Differenz zwischen dem harmonischen Sollwertsignal und dem Messsignal gebildet. Nach einer Ausführungsform schaltet die Steuereinheit 616 die Filtereinheit 612 ab, sobald deren Ergebnisse an die Steuereinheit 616 übertragen sind. Die Abschaltung der Filtereinheit 612 reduziert beispielsweise den Stromverbrauch. Zusätzlich kann, bei einer Realisierung in einem Mikroprozessor, die der Schätzung benötigte Rechenkapazität für die im Normalbetrieb der Vorrichtung erforderlichen Rechenoperationen frei gemacht werden. Gemäß einer anderen Ausführungsform steuert die Steuereinheit 616 die Aktuator-Aktivierungseinheit 695 der Figur 1 so, dass die Aktuatoreinheit 180 zum Zeitpunkt $t_0$ eingeschaltet wird.

Gemäß einer Ausführungsform umfasst die Regler-Erweiterungseinheit 600 eine Vorstufeneinheit 640. Die Vorstufeneinheit 640 ermittelt aus dem Messsignal, ob die Amplitude A der Restschwingung eine Minimalschwelle $A_{xmin}$ unterschreitet. Ist dies der Fall, so wird davon ausgegangen, dass der Schwinger keine signifikante Restbewegung mehr ausführt und der Schwinger unproblematisch aus der Ruhe heraus gestartet werden kann. Gemäß einer Ausführungsform startet das harmonische Sollwertsignal dann mit der Startamplitude $A_s = A_{xmin}$. Die Phasenlage ist beim Start aus dem Ruhezustand heraus beliebig und die Frequenz des harmonischen Sollwertsignals lässt sich beispielsweise aus Kenntnis der Temperatur und einem linearen Temperaturmodell für den Schwinger 190 ermitteln oder aus der Frequenzspeichereinheit 630 auslesen. Gemäß einer Ausführungsform ermittelt die Vorstufeneinheit 640 aus einigen Schwingungsperioden einen Maximalwert $A_{max}$ und einen Minimalwert $A_{min}$ und berechnet aus den Werten $A_{max}$ und $A_{min}$ Grobwerte für die momentane Schwingungsamplitude A und einen momentanen Schwingungs-Offset $A_0$ gemäß den Gleichungen 1 und 2:

$$(1) \qquad A = \frac{A_{max} - A_{min}}{2}$$

$$(2) \qquad A_0 = \frac{A_{max} + A_{min}}{2}$$

Die Regler-Erweiterungseinheit 600 ist beispielsweise als digitaler Schaltkreis realisiert, zum Beispiel als ASIC (anwenderspezifischer integrierter Schaltkreis), DSP (digitaler Signalprozessor) oder FPGA (Field Programmable Gate Array). Regler-Erweiterungseinheit 600 und Regler-Haupteinheit 200 können im selben oder in verschiedenen Bauelementen ausgebildet sein. Nach einer weiteren Ausführungsform sind Regler-Erweiterungseinheit 600 und Regler-Haupteinheit 200 vollständig oder in Teilen Programme, die von einem Computer oder Mikroprozessor ausgeführt werden.

Gemäß einer Ausführungsform ist die Filtereinheit 612 ein Kalman-Filter. Das Schätzen von Werten für Amplitude und Phase läuft im Vergleich zur Abklingzeitkonstante des Schwingers um Größenordnungen schneller ab. Nach einer Ausführungsform wird daher die Bewegung y0 des Oszillators vereinfacht als ungedämpfte harmonische Schwingung angesetzt:

$$(3) \qquad y_0(t) = A \cdot \sin(\omega_{0M} \cdot t)$$

Das Messsignal y*(t) enthält neben der eigentlichen Schwingerbewegung y0 noch das unvermeidliche Messrauschen w und einen konstanten Offset A0.

$$(4) \qquad y^* = y + A_0 = y_0 + w + A_0$$

Die Schwingerbewegung y0(t) wird als Lösung des Differentialgleichungssystems mit den Gleichungen (5) bis (10) betrachtet:

$$(5) \qquad \dot{y}_0 = A \cdot \omega_{0M} \cdot \cos(\omega_{0M} \cdot t)$$

$$(6) \qquad \ddot{y}_0 = -A \cdot \omega_{0M}^2 \cdot \sin(\omega_{0M} \cdot t)$$

$$(7) \qquad x_1 = y_0$$

$$(8) \qquad x_2 = \dot{y}_0$$

$$(9) \qquad \dot{x}_1 = x_2$$

$$(10) \qquad \dot{x}_2 = -\omega_{0M}{}^2 \cdot x_1$$

Die Zustandsbeschreibung dieses Systems lässt sich in Matrizenschreibweise mit Gleichung (11) wie folgt angeben:

$$(11) \qquad \underline{\dot{x}} = \begin{bmatrix} 0 & 1 \\ -\omega_{0M}{}^2 & 0 \end{bmatrix} \cdot \underline{x} = \underline{A} \cdot \underline{x}$$

Um ein Differenzengleichungssystem zu erhalten, wird das obige System bezüglich der verwendeten Abtastzeit T des Messsignals diskretisiert. Dies wird mit Hilfe der Laplace-Transformation abgebildet:

$$(12) \qquad \underline{\phi}(s) = \left[ s \cdot \underline{I} - \underline{A} \right]^{1}$$

$$(13) \qquad \underline{\phi}(s) = \begin{bmatrix} s & -1 \\ \omega_{0M}{}^2 & s \end{bmatrix}^{-1} = \begin{bmatrix} \dfrac{s}{s^2 + \omega_{0M}{}^2} & \dfrac{1}{s^2 + \omega_{0M}{}^2} \\ \dfrac{-\omega_{0M}{}^2}{s^2 + \omega_{0M}{}^2} & \dfrac{s}{s^2 + \omega_{0M}{}^2} \end{bmatrix}$$

$$(14) \qquad \underline{\phi}(t) = \begin{bmatrix} \cos(\omega_{0M} \cdot t) & \dfrac{1}{\omega_{0M}} \cdot \sin(\omega_{0M} \cdot t) \\ -\omega_{0M} \cdot \sin(\omega_{0M} \cdot t) & \cos(\omega_{0M} \cdot t) \end{bmatrix}$$

$$(15) \qquad \underline{\phi}(T) = \begin{bmatrix} \cos(\omega_{0M} \cdot T) & \dfrac{1}{\omega_{0M}} \cdot \sin(\omega_{0M} \cdot T) \\ -\omega_{0M} \cdot \sin(\omega_{0M} \cdot T) & \cos(\omega_{0M} \cdot T) \end{bmatrix}$$

Elementeweise lässt sich das Differenzengleichungssystem wie folgt angeben:

$$(16) \qquad x_1(k+1) = \cos(\omega_{0M} \cdot T) \cdot x_1(k) + \frac{1}{\omega_{0M}} \cdot \sin(\omega_{0M} \cdot T) \cdot x_2'(k)$$

$$(17) \qquad x_2'(k+1) = -\omega_{0M} \cdot \sin(\omega_{0M} \cdot T) \cdot x_1(k) + \cos(\omega_{0M} \cdot T) \cdot x_2'(k)$$

Um die Rechnung und Implementierung zu vereinfachen, bietet es sich an, die Zustandsgröße $x_2$' mit $\omega_{0M}$ wie folgt zu normieren:

$$(18) \quad x_1(k+1) = \cos(\omega_{0M} \cdot T) \cdot x_1(k) + \sin(\omega_{0M} \cdot T) \cdot \frac{x_2'(k)}{\omega_{0M}}$$

$$(19) \quad \frac{x_2'(k+1)}{\omega_{0M}} = -\sin(\omega_{0M} \cdot T) \cdot x_1(k) + \cos(\omega_{0M} \cdot T) \cdot \frac{x_2'(k)}{\omega_{0M}}$$

Mit der neuen Zustandsvariable

$$(20) \quad x_2 = \frac{x_2'}{\omega_{0M}}$$

kann die Zustandsbeschreibung des diskretisierten Systems wie folgt angegeben werden:

$$(21) \quad \underline{x}(k+1) = \underline{\phi}(T) \cdot \underline{x}(k) = \begin{bmatrix} \cos(\omega_{0M} \cdot T) & \sin(\omega_{0M} \cdot T) \\ -\sin(\omega_{0M} \cdot T) & \cos(\omega_{0M} \cdot T) \end{bmatrix} \cdot \underline{x}(k)$$

$$(22) \quad y(k) = \underline{c}^T \cdot \underline{x}(k) + w(k) = \begin{bmatrix} 1 & 0 \end{bmatrix} \cdot \underline{x}(k) + w(k)$$

Für die Varianz des Messrauschens w wird im Folgenden das Symbol R benutzt.

Basierend auf den verrauschten Messwerten y* wird zur Gewinnung eines Schätzwerts $\hat{x}$ für den tatsächlichen Systemzustand $\underline{x}$ gemäß einer Ausführungsform ein Kalman-Filter verwendet. Das Kalman-Filter kann durch den folgenden Satz von Gleichungen beschrieben werden:

$$(23) \quad \underline{P}^*(0) = \begin{bmatrix} \frac{1}{2} & 0 \\ 0 & \frac{1}{2} \end{bmatrix} \underline{x}^*(0) = \begin{bmatrix} 0 \\ 0 \end{bmatrix}$$

$$(24) \quad \underline{k}(k) = \underline{P}^*(k) \cdot \underline{c} \cdot \left\{ \underline{c}^T \cdot \underline{P}^*(k) \cdot \underline{c} + R \right\}^{-1}$$

$$(25) \quad \underline{\tilde{P}}(k) = \underline{P}^*(k) - \underline{k}(k) \cdot \underline{c}^T \cdot \underline{P}^*(k)$$

$$(26) \quad \underline{P}^*(k+1) = \underline{\phi} \cdot \underline{\tilde{P}}(k) \cdot \underline{\phi}^T$$

$$(27) \quad y(k) = y^*(k) - A_0$$

$$(28) \quad \underline{\hat{x}}(k) = \underline{x}^{\bullet}(k) + \underline{k}(k) \cdot \left\{ y(k) - \underline{c}^{T} \cdot \underline{x}^{\bullet}(k) \right\}$$

$$(29) \quad \underline{x}^{\bullet}(k+1) = \underline{\phi} \cdot \underline{\hat{x}}(k)$$

In elementeweiser Darstellung können die Kalman-Filtergleichungen mit den Gleichungen (30) bis (42) wie folgt angegeben werden. Hierbei ist die Symmetrie der Matrizen $\underline{P}$ und $\tilde{P}$ ausgenutzt:

$$(30) \quad k_1(k) = \frac{P_{11}^{\bullet}(k)}{P_{11}^{\bullet}(k) + R}$$

$$(31) \quad k_2(k) = \frac{P_{12}^{\bullet}(k)}{P_{11}^{\bullet}(k) + R}$$

$$(32) \quad \tilde{P}_{11}(k) = P_{11}^{\bullet}(k) - P_{11}^{\bullet}(k) \cdot k_1(k)$$

$$(33) \quad \tilde{P}_{12}(k) = P_{12}^{\bullet}(k) - P_{11}^{\bullet}(k) \cdot k_2(k)$$

$$(34) \quad \tilde{P}_{22}(k) = P_{22}^{\bullet}(k) - P_{12}^{\bullet}(k) \cdot k_2(k)$$

$$(35) \quad P_{11}^{\bullet}(k+1) = \cos^2(\omega_{0M} \cdot T) \cdot \tilde{P}_{11}(k) + 2 \cdot \cos(\omega_{0M} \cdot T) \cdot \sin(\omega_{0M} \cdot T) \cdot \tilde{P}_{12}(k) + \sin^2(\omega_{0M} \cdot T) \cdot \tilde{P}_{22}(k)$$

$$(36) \quad P_{12}^{\bullet}(k+1) = -\cos(\omega_{0M} \cdot T) \cdot \sin(\omega_{0M} \cdot T) \cdot \tilde{P}_{11}(k) + (\cos^2(\omega_{0M} \cdot T) - \sin^2(\omega_{0M} \cdot T)) \cdot \tilde{P}_{12}(k) + \cos(\omega_{0M} \cdot T) \cdot \sin(\omega_{0M} \cdot T) \cdot \tilde{P}_{22}(k)$$

$$(37) \quad P_{22}^{\bullet}(k+1) = \sin^2(\omega_{0M} \cdot T) \cdot \tilde{P}_{11}(k) - 2 \cdot \cos(\omega_{0M} \cdot T) \cdot \sin(\omega_{0M} \cdot T) \cdot \tilde{P}_{12}(k) + \cos^2(\omega_{0M} \cdot T) \cdot \tilde{P}_{22}(k)$$

$$(38) \quad y(k) = y^{\bullet}(k) - A_0$$

$$(39) \quad \hat{x}_1(k) = x_1^{\bullet}(k) + k_1(k) \cdot (y(k) - x_1^{\bullet}(k))$$

$$(40) \quad \hat{x}_2(k) = x_2^{\bullet}(k) + k_2(k) \cdot (y(k) - x_1^{\bullet}(k))$$

$$(41) \quad x_1^{\bullet}(k+1) = \cos(\omega_{0M} \cdot T) \cdot \hat{x}_1(k) + \sin(\omega_{0M} \cdot T) \cdot \hat{x}_2(k)$$

$$(42) \quad x_2^{\bullet}(k+1) = -\sin(\omega_{0M} \cdot T) \cdot \hat{x}_1(k) + \cos(\omega_{0M} \cdot T) \cdot \hat{x}_2(k)$$

Der Nulldurchgang von negativen zu positiven Werten des geschätzten Signals $\hat{x}_1$ wird benutzt, um das Sollsignal der Amplitudenregelung phasenrichtig zu starten. Der Zeltnullpunkt wird nun so gewählt, dass er mit dem detektierten Nulldurchgang zusammenfällt. Das geschätzte Signal ist dann proportional zu $\sin(\omega_{0M} \cdot T \cdot k)$.

Das Sollwertsignal der Amplitudenregelung soll exakt im Nulldurchgang des geschätzten Signals mit der Startphase 0 loslaufen. Da aber nur Abtastwerte mit einer zeitlichen Auflösung von T zur Verfügung stehen, kann der Nulldurchgang im Allgemeinen nicht genau getroffen werden. Nach einer Ausführungsform wird daher aus dem Abtastwert $\hat{x}_{1,0}$ vor dem Nulldurchgang und dem Abtastwert $\hat{x}_{1,1}$ nach dem Nulldurchgang durch lineare Interpolation nach Gleichung (43) eine zusätzlich zu berücksichtigende Phase $\Delta\varphi_0$ bestimmt:

$$(43) \quad \Delta\varphi_0 = \frac{\hat{x}_{1,1}}{\hat{x}_{1,1} - \hat{x}_{1,0}} \cdot \omega_{0M} \cdot T$$

Diese Phase kommt erst im Folgetakt zur Wirkung, was zu einer zusätzlich zu berücksichtigenden Verzögerung führt. Darüberhinaus müssen weitere realisierungsabhängige Verzögerungen in der Signalverarbeitung (z.B. bei der Messwerterfassung) berücksichtigt werden. Diese weiteren Verzögerungen in Vielfachen der Abtastzeit werden mit $n_{asc}$ angenommen. Die erforderliche Startphase $\varphi_0$ ergibt sich damit nach Gleichung (44):

$$(44) \quad \varphi_0 = \Delta\varphi_0 + (n_{asc}+1) \cdot \omega_{0M} \cdot T = \frac{\hat{x}_{1,1}}{\hat{x}_{1,1} - \hat{x}_{1,0}} \cdot \omega_{0M} \cdot T + (n_{asc}+1) \cdot \omega_{0M} \cdot T$$

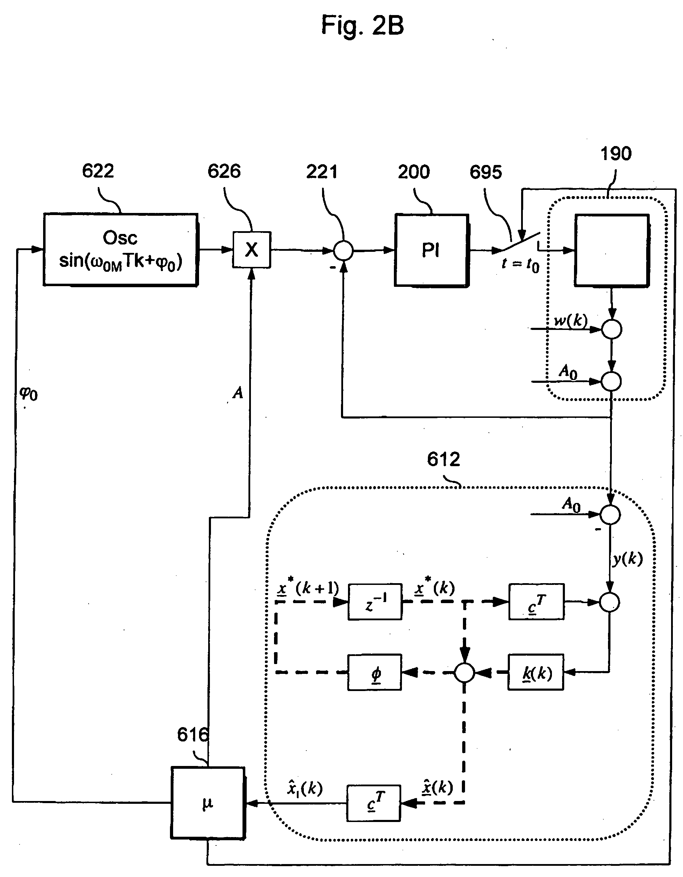

Die Figur 2B zeigt Einzelheiten eines Kalman-Filters als Filtereinheit 612 einer Regelungsvorrichtung.

Falls das System aus mehreren Oszillatoren besteht und die Antriebe der Oszillatoren aufgrund einer gemeinsamen Elektronik auch gemeinsam gestartet werden müssen (z. B. bei einer Inertial Measurement Unit (IMU), bestehend aus drei Drehratensensoren), werden die Nulldurchgänge der Oszillatoren aber nicht notwendigerweise im selben Abtasttakt liegen. Deshalb wird die Startphase für diejenigen Oszillatoren, welche ihren Nulldurchgang bereits gefunden haben, für jeden zusätzlichen Abtasttakt um $\omega_{0M} \cdot T$ erhöht. Dies geschieht solange, bis auch der letzte Oszillator seinen Nulldurchgang gefunden hat.

Beispielsweise kann, sobald die Synchronisationsbedingung (der Nulldurchgang des gemessenen Schwingersignals) bei mindestens einem dieser Sensoren detektiert ist, der Antrieb dieser Sensoren gemäß der oben beschriebenen Methode gestartet werden. Die Zuschaltung der verbleibenden Sensoren kann dann erfolgen, sobald auch deren individuelle Synchronisationsbedingung erfüllt ist. Der Zeitpunkt für die Zuschaltung des Antriebes wird dabei bei allen Sensoren individuell gewählt. Gemäß einer anderen Ausführungsform mit einer gemeinsamen Elektronik, bei der nur ein gemeinsamer Einschaltzeitpunkt des Antriebes möglich ist, wird abgewartet bis die Synchronisationsbedingung für alle Sensoren detektiert ist. Da die Synchronisationsbedingung pro Abtasttakt einmal ausgewertet werden kann, wird für jeden Sensor, dessen Synchronisationsbedingung bereits erreicht war, pro hinzukommenden Abtasttakt die zum Abtasttakt gehörende Phase $\omega_{0M} \cdot T$ zur Startphase hinzuaddiert.

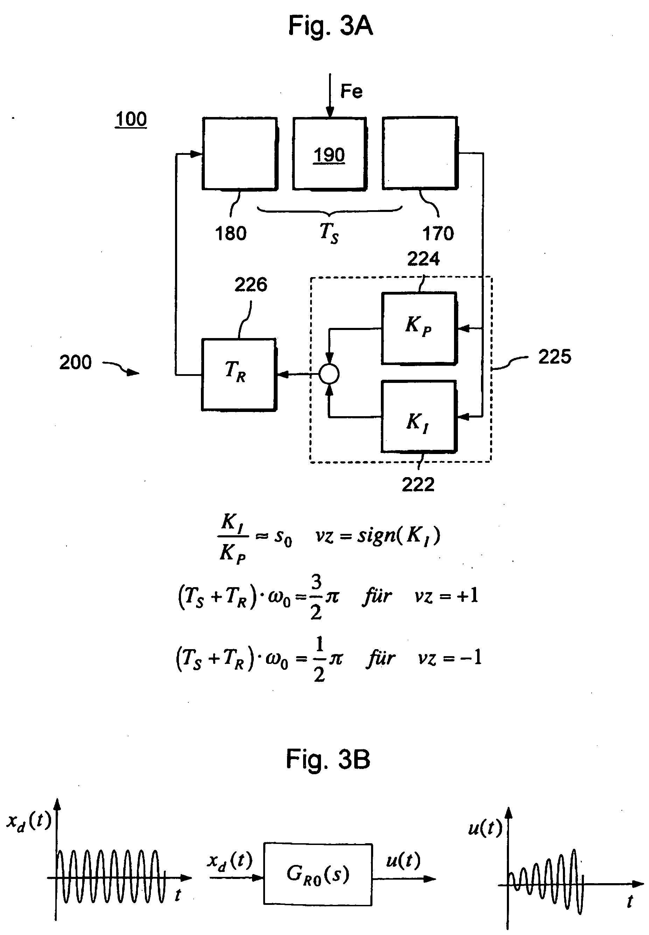

Die in der Figur 3A gezeigte Ausführungsform beschreibt zur Verdeutlichung der Wirkungsweise des der Regler-Haupteinheit 200 zugrunde liegenden Prinzips eine analoge Ausführungsform derselben innerhalb einer Vorrichtung 100. Die Regler-Haupteinheit 200 umfasst einen PI-Regler 225 für harmonische Führungsgrößen bzw. harmonische Sollwertsignale mit einem integrierenden Übertragungsglied 222 mit dem Integrierbeiwert $K_l$ und einem proportionalen Übertragungsglied 224 mit dem Verstärkungsfaktor $K_p$. Der PI-Regler 225 für harmonische Führungsgrößen erzeugt aus einer mit der Sprungfunktion amplitudenmodulierten harmonischen Schwingung konstanter Amplitude am Reglereingang eine harmonische Schwingung mit gleicher Frequenz und zeitpropertionaler Amplitude am Reglerausgang.

Die Figur 3B illustriert die Transformation eines sinusmodulierten Sprungsignals $x_d(t)$ auf ein harmonisches Ausgangssignal u(t) mit zeitproportionaler Amplitude durch die Übertragungsfunktion $G_{R0}(s)$ des PI-Reglers 225. Das beschriebene Verhalten des PI-Reglers setzt eine Dimensionierung der Reglerparameter $K_i$, $K_p$ wie nachfolgend beschrieben voraus. Gleichung (45) gibt den Zusammenhang zwischen dem Reglerausgangssignal u(t) und dem Reglereingangssignal $x_d(t)$ für $x_d(t) = \sigma(t)$ wieder:

$$(45) \qquad u(t) = (K_P + K_I \cdot t) \cdot \sin(\omega_0 \cdot t) \cdot \sigma(t).$$

Die Laplace-Transformierten von Reglerausgangssignal u(t) und Reglereingangssignal $x_d(t)$ ergeben sich aus den Gleichungen (46a) und (46b):

$$(46a) \qquad X_d(s) = \frac{\omega_0}{s^2 + \omega_0^2}$$

$$(46b) \qquad U(s) = K_P \cdot \frac{\omega_0}{s^2 + \omega_0^2} + K_I \cdot \frac{2 \cdot \omega_0 \cdot s}{(s^2 + \omega_0^2)^2}.$$

Die Übertragungsfunktion $G_{R0}(s)$ des PI-Reglers 225 für harmonische Sollwertsignale ergibt sich demnach nach Gleichung (47):

$$(47) \qquad G_{R0}(s) = \frac{U(s)}{X_d(s)} = K_P \cdot \frac{s^2 + 2 \cdot \dfrac{K_I}{K_P} \cdot s + \omega_0^2}{s^2 + \omega_0^2}$$

Charakteristisch für den kontinuierlichen PI-Regler 225 ist ein aus dem verallgemeinerten Integralanteil resultierender konjugiert komplexer Pol bei $s = \pm j\omega_0$. Der PI-Regler 225 erzeugt am Reglerausgang bei einer harmonischen Schwingung der Frequenz $\omega_0$ am Reglereingang keine Phasenverschiebung. Zur Einstellung einer beliebigen Phase umfasst die Regler-Haupteinheit 200 daher zusätzlich ein Totzeitglied 226 mit einer Reglertotzeit $T_R$ in Serie zum PI-Regler 225. Die Reglerübertragungsfunktion $G_R(s)$ der Regler-Haupteinheit 200 ergibt sich demnach nach Gleichung (48):

$$(48) \qquad G_R(s) = G_{R0}(s) \cdot e^{-T_R \cdot s} = K_P \frac{s^2 + 2 \cdot \dfrac{K_I}{K_P} \cdot s + \omega_0^2}{s^2 + \omega_0^2} \cdot e^{-T_R \cdot s}$$

Die Reglerparameter $K_i$, $K_p$ werden so gewählt, dass die Reglernullstellen in der Reglerübertragungsfunktion nach Gleichung (48) den konjugiert komplexen Streckenpol in der Streckenübertragungsfunktion nach Gleichung (49) kompensieren.

$$(49) \qquad G(s) = \frac{A}{(s + s_0)^2 + \omega_0^2} \cdot e^{-T_S \cdot s} = G_o(s) \cdot e^{-T_S \cdot s}$$

Durch Koeffizientenvergleich der Gleichungen (49) und (48) ergeben sich zur Bestimmung der Reglerparameter $K_i$, $K_p$ die Gleichungen (50a) und (50b):

$$(50a) \qquad 2 \cdot \frac{K_I}{K_P} \overset{!}{=} 2 \cdot s_0$$

$$(50b) \qquad \omega_0^2 \overset{!}{=} \omega_0^2 + s_0^2.$$

Gemäß einer Ausführungsform werden die Dämpfung $s_0$ und die Resonanzkreisfrequenz $\omega_0$ des Schwingers 190 so gewählt, dass $s_0 \ll \omega_0$ gilt und damit Gleichung (50b) in sehr guter Näherung erfüllt ist. Aus der Gleichung (50a) ergibt sich Gleichung (50c) als Dimensionierungsvorschrift für das Verhältnis von Integrierbeiwert K, zu Verstärkungs-

faktor $K_p$:

$$(50c) \qquad \frac{K_I}{K_P} \overset{!}{=} s_0 .$$

Die Übertragungsfunktion $G_k(s)$ des korrigierten offenen Kreises ergibt sich aus dem Produkt von Streckenübertragungsfunktion $G_S(s)$ und Reglerübertragungsfunktion $G_R(s)$. Da sich bei entsprechender Dimensionierung nach Gleichung (50b), (50c) die Ausdrücke für den konjugiert komplexen Streckenpol und die konjugiert komplexe Reglernullstelle wegkürzen, ergibt sich die Übertragungsfunktion $G_k(s)$ des korrigierten offenen Kreises nach Gleichung (51):

$$(51) \qquad G_k(s) = G_S(s) \cdot G_R(s) = A \cdot K_P \cdot \frac{1}{s^2 + \omega_0^{\,2}} \cdot e^{-(T_S + T_R)s}$$

Bei Regelung mit konventionellem PI-Regler tritt im Phasenfrequenzgang des korrigierten offenen Kreises bei der Frequenz $\omega=0$ ein Phasensprung von +90° nach -90° auf. Dagegen tritt in dem für harmonische Führungsgrößen ausgelegten PI-Regler 225 bei der Frequenz $\omega_0$ ein 180°-Phasensprung auf, der jedoch nicht notwendigerweise zwischen +90° und - 90° erfolgt. Gemäß einer Ausführungsform wird daher die Reglertotzeit $T_R$ so gewählt, dass der 180°-Phasensprung möglichst genau bei $\omega_0$ auftritt, beispielsweise indem die Reglerparameter nach Gleichung (52a) dimensioniert werden:

$$(52a) \qquad (T_S + T_R) \cdot \omega_0 = \frac{3}{2} \cdot \pi$$

Ist die allein durch die Streckentotzelt $T_S$ hervorgerufene Phasenverschiebung bei $\omega_0$ kleiner 90°, so kann ein Phasenanteil von 180° auch durch einen invertierenden Regler erzeugt werden. In diesem Fall müssen sich die durch die Reglertotzeit $T_R$ und Streckentotzeit $T_S$ hervorgerufenen Phasen bei $\omega_0$ lediglich zu $\pi/2$ ergänzen. Die Dimensionierungsvorschrift für die Regtertotzeit $T_R$ lautet dann:

$$(52b) \qquad (T_S + T_R) \cdot \omega_0 = \frac{\pi}{2} .$$

Aus dem Frequenzgang des korrigierten offenen Kreises kann mittels des Nyquist-Kriteriums auf die Stabilitätseigenschaften des geschlossenen Kreises geschlossen werden. Der korrigierte offene Kreis besteht aus dem verallgemeinerten Integrator und der Kombination aus Streckentotzeit $T_S$ und Reglertotzeit $T_R$. Durch geeignete Dimensionierung der Reglertotzeit $T_R$ nach einer der Gleichungen (14a) oder (14b) weist die Phasenkennlinie bei der Frequenz $\omega_0$ einen 180°-Sprung zwischen +90° für tiefere Frequenzen $\omega < \omega_0$ nach -90° zu höheren Frequenzen $\omega > \omega_0$ hin auf. Die Übertragungsfunktion $G_w(s)$ des geschlossenen Kreises ergibt sich aus der des korrigierten offenen Kreises $G_k(s)$:

$$(53) \qquad G_w(s) = \frac{G_k(s)}{1 + G_k(s)} .$$

Wird die Regtertotzeit $T_R$ gemäß Gleichung (52a) bestimmt, so ist der geschlossene Kreis genau dann stabil, wenn die Ortskurve des korrigierten offenen Kreises für $0 \le \omega < \omega_0$ den Punkt -1 weder umschließt noch durchdringt.
Wird dagegen die Reglertotzeit $T_R$ anhand der Gleichung (52b) bestimmt und erzeugt der PI-Regler 225 eine 180°-Phase, so ist der geschlossene Kreis genau dann stabil, wenn die Ortskurve des korrigierten offenen Kreis auf der negativen reellen Achse bei einem Wert größer -1 beginnt.
Im Intervall $0 \le \omega < \omega_0$ schneidet die Betragskennlinie die 0 dB Linie bei der Durchtrittsfrequenz, wobei der Frequenzabstand der Durchtrittsfrequenz zu $\omega_0$ die Bandbreite des geschlossenen Kreises bestimmt. Über den Verstärkungsfaktor $K_P$ lassen sich der Betragsfrequenzgang und damit die Durchtrittsfrequenz in Ordinatenrichtung verschieben, so dass die resultierende Bandbreite für den geschlossenen Kreis einstellbar ist. Gemäß einer Ausführungsform wird der Verstärkungsfaktor $K_P$ im Rahmen der durch die Stabilitätskriterlen vorgegebenen Grenzen so gewählt, dass die Bandbreite maximal ist.
Zusammenfassend umfasst die Regler-Haupteinheit 200 einen PI-Regler 225 für harmonische Führungsgrößen, dem ein harmonisches Sollwertsignal zugeführt wird und der ein proportionales Übertragungsglied 224 mit einem Verstärkungsfaktor $K_P$ und ein integrierendes Übertragungsglied 222 mit einem Integrierbeiwert K, umfasst. Der Integrierbeiwert $K_I$ und der Verstärkungsfaktor $K_P$ sind so gewählt, dass sich in der s-Ebene die Nullstelle der Reglerübertragungsfunktion des PI-Reglers 225 und der konjugiert komplexe Pol der den Schwinger 190 beschreibenden Streckenübertragungsfunktion kompensieren.

Gemäß einer Ausführungsform ist die Dämpfung $s_0$ des Schwingers 190 bezüglich der Auslenkung in der Anregungsrichtung sehr viel kleiner als die Resonanzkreisfrequenz $\omega_0$ des Schwingers 190 und das Verhältnis des Integrierbeiwerts $K_I$ zum Verstärkungsfaktor $K_P$ in $\sec^{-1}$ entspricht in etwa der Dämpfung $s_0$. Zudem kann der Verstärkungsfaktor $K_P$ so gewählt werden, dass die resultierende Bandbreite für die jeweilige Stabilitätsanforderung möglichst hoch ist. Der Integrierbeiwert $K_I$ wird dann in Abhängigkeit von der Dämpfung $s_0$ und dem Verstärkungsfaktor $K_P$ nach Gleichung (50c) gewählt.

Nach einer Ausführungsform weist das aus der Aktuatoreinheit 180, dem Schwinger 190 und der Sensoreinheit 170 gebildete System eine Streckentotzeit $T_S$ und die Regler-Haupteinheit 200 ein seriell zum PI-Regler 225 wirkendes Totzeitglied 226 mit der Reglertotzeit $T_R$ auf. Die Reglertotzeit $T_R$ wird in Abhängigkeit von der Resonanzkreisfrequenz $\omega_0$ des Schwingers 190 und der Streckentotzeit $T_S$ so gewählt, dass der Phasenfrequenzgang des korrigierten offenen Kreises bei der Frequenz $\omega_0$ einen Phasensprung von +90° nach -90° zu höheren Frequenzen hin aufweist.

Nach einer ersten Variante dieser Ausführungsform dreht der PI-Regler für harmonische Führungsgrößen das Vorzeichen nicht und die Reglertotzeit $T_R$ wird so gewählt, dass das Produkt aus der Resonanzkreisfrequenz $\omega_0$ und der Summe aus Streckentotzeit $T_S$ und Reglertotzeit $T_R$ als Ergebnis $3\pi/2$ ergibt. Nach einer anderen Variante dieser Ausführungsform invertiert der PI-Regler 225 das Vorzeichen, bzw. schiebt die Phase um 180°, und die durch Reglertotzeit $T_R$ und Streckentotzeit $T_S$ hervorgerufene Phase bei der Resonanzkreisfrequenz $\omega_0$ wird lediglich zu $\pi/2$ ergänzt, so dass das Produkt aus der Resonanzkreisfrequenz $\omega_0$ und der Summe aus Streckentotzeit $T_S$ und Reglertotzeit $T_R$ als Ergebnis $\pi/2$ ergibt.

Da die Regler-Haupteinheit 200 keine Bastsbandtransformation vorsieht, die zum Dämpfen von höherfrequenten Mischprodukten ein Tiefpassfilter erforderlich macht, kann die Regler-Haupteinheit 200 deutlich breitbandiger ausgelegt werden. Die Regler-Haupteinheit 200 reagiert schneller auf Störgrößen als vergleichbare Regler, die eine Basisbandtransformation vorsehen.

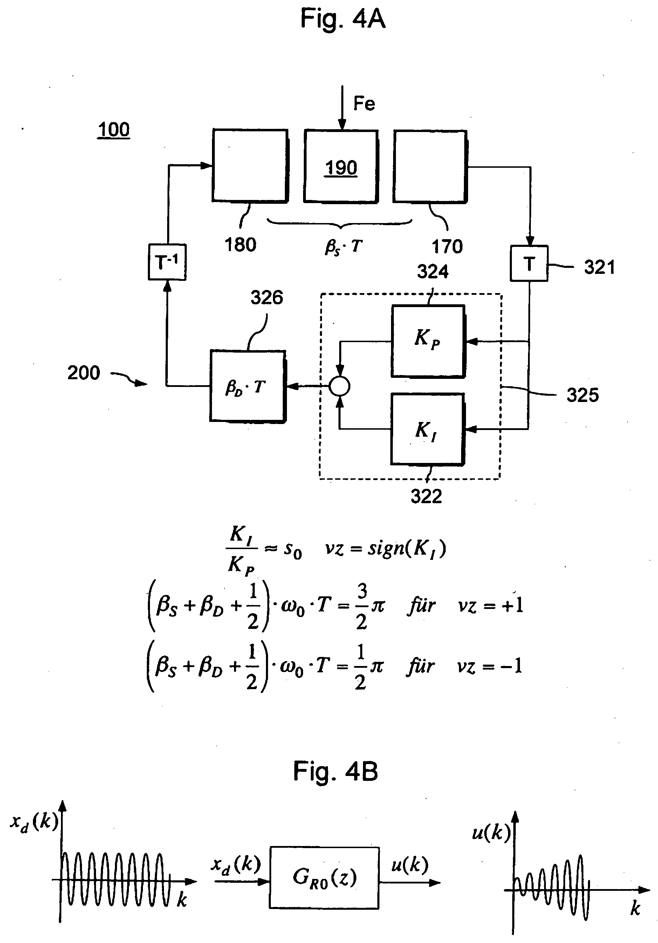

Die Figuren 4A und 4B beziehen sich auf eine Ausführungsform, bei der die Regler-Haupteinheit 200 einen diskreten PI-Regler 325 für harmonische Sollwertsignale mit einem diskreten proportionalen Übertragungsglied 324 mit dem Verstärkungsfaktor $K_P$ und einem diskreten integrierenden Übertragungsglied 322 mit dem Integrierbeiwert K, aufweist. Gemäß einer Ausführungsform wird das von der Sensoreinheit 170 ausgegebene analoge Messsignal von einer Abtasteinheit 321 mit einer Abtastzeit T abtastet und in ein digitales Eingangssignal für diskreten PI-Regler 325 umwandelt. Gemäß einer anderen Ausführungsform gibt die Sensoreinheit 170 bereits ein digitales Messsignal aus.

Gemäß einer Ausführungsform, bei der das die Aktuatoreinheit 180, den Schwinger 190 und die Sensoreinheit 170 umfassende System eine Streckentotzeit $T_S$ aufweist, umfasst die Regler-Haupteinheit 200 ein in Serie zum diskreten PI-Regler 325 angeordnetes Totzeitglied 326 mit einer Reglertotzeit $T_R$. Im Weiteren werden sowohl die Streckentotzeit $T_S$ als auch die Reglertotzeit $T_R$ gemäß den Gleichungen (54a) und (54b) als Vielfache der Abtastzeit T ausgedrückt:

$$(54a),\ (54b) \qquad\qquad T_S = \beta_S \cdot T \quad \text{und} \quad T_R = \beta_D \cdot T.$$

Die Reglertotzeit $T_R$ wird dabei so bestimmt, dass der korrigierte offene Kreis bei der Resonanzkreisfrequenz $\omega_0$ einen Phasensprung von +90° und -90° zu höheren Frequenzen hin aufweist.

Gemäß einer Ausführungsform ist das Verhältnis des Integrierbeiwerts K, zum Verstärkungsfaktor $K_P$ so eingestellt, dass in der s-Ebene die Reglernullstellen der Reglerübertragungsfunktion den konjugiert komplexen Streckenpol der Streckenübertragungsfunktion kompensieren. Gemäß einer anderen Ausführungsform sind die Reglerparameter so gewählt, dass die Übertragungsfunktion des geschlossenen Kreises eines äquivalenten Basisbandsystems einen doppelten reellen Eigenwert aufweist. Die Regler-Haupteinheit 200 ist beispielsweise als digitaler Schaltkreis realisiert, zum Beispiel als ASIC (anwenderspezifischer integrierter Schaltkreis), DSP (digitaler Signalprozessor) oder FPGA (Field Programmable Gate Array) oder als Programm für einen Computer oder Mikroprozessor.

Die Figur 4B illustriert die z-Übertragungsfunktion $G_{R0}(z)$ des diskreten PI-Reglers 325 für harmonische Führungsgrößen gemäß Figur 4A. Die Übertragungsfunktion $G_{R0}(z)$ wird so bestimmt, dass der PI-Regler 325 aus einem Eingangssignal $x_d(k)$ umfassend eine mit der Sprungfunktion $\sigma(k)$ modulierte harmonische Schwingung eine harmonische Schwingung gleicher Frequenz mit zeitproportionaler Amplitude als Reglerausgangssignal $u(k)$ erzeugt, wie durch Gleichung (55) ausgedrückt:

$$(55) \qquad u(k) = (K_P + K_I \cdot T \cdot k) \cdot \sin(\omega_0 \cdot T \cdot k) \cdot \sigma(k)$$

Die Eingangsfunktion $X_d(z)$ und Ausgangsfunktion $U(z)$ ergeben sich durch z-Transformation nach den Gleichungen (56a) und (56b):

$$(56a) \qquad X_d(z) = \frac{z \cdot \sin(\omega_0 \cdot T)}{z^2 - 2 \cdot \cos(\omega_0 \cdot T) \cdot z + 1}$$

$$(56b) \qquad U(z) = K_P \cdot \frac{z \cdot \sin(\omega_0 \cdot T)}{z^2 - 2 \cdot \cos(\omega_0 \cdot T) \cdot z + 1} + K_I \cdot \frac{T \cdot z^3 \cdot \sin(\omega_0 \cdot T) - T \cdot z \cdot \sin(\omega_0 \cdot T)}{(z^2 - 2 \cdot \cos(\omega_0 \cdot T) \cdot z + 1)^2}$$

Die Übertragungsfunktion $G_{R0}(z)$ des diskreten PI-Reglers 325 für harmonische Führungsgrößen ergibt sich dann nach Gleichung (56c):

$$(56c) \qquad G_{R0}(z) = \frac{U(z)}{X_d(z)} = \frac{(K_P + K_I \cdot T) \cdot z^2 - 2 \cdot K_P \cdot \cos(\omega_0 \cdot T) \cdot z + K_P - K_I \cdot T}{z^2 - 2 \cdot \cos(\omega_0 \cdot T) \cdot z + 1}$$

Ein solcher diskreter PI-Regler weist infolge des verallgemeinerten Integralanteils einen Pol bei $z = e^{\pm j \cdot \omega_0 \cdot T}$ auf und erzeugt bei einer harmonischen Schwingung der Frequenz $\omega_0$ am Eingang keine Phasenverschiebung am Ausgang. Um dennoch eine beliebige Phase einstellen zu können, wird die Regler-Haupteinheit 200 gemäß einer Ausführungsform mit einem Totzeitglied 326 mit der Verzögerung $\beta_D$ vorgesehen. Die Reglerübertragungsfunktion $G_R(z)$ der Regler-Haupteinheit 200 mit dem Totzeitglied 326 und dem diskreten PI-Regler 325 ergibt sich dann nach Gleichung (57):

$$(57) \qquad G_R(z) = G_{R0}(z) \cdot z^{-\beta_D} = \frac{(K_P + K_I \cdot T) \cdot z^2 - 2 \cdot K_P \cdot \cos(\omega_0 \cdot T) \cdot z + K_P - K_I \cdot T}{z^2 - 2 \cdot \cos(\omega_0 \cdot T) \cdot z + 1} \cdot z^{-\beta_D}$$

Das Modell der kontinuierlichen Regelstrecke nach Gleichung (49) ist in entsprechender Weise zu diskretisieren. Dazu wird zunächst In der Übertragungsfunktion $G(s)$ der Regelstrecke nach Gleichung (49) die Streckentotzeit $T_S$ gemäß Gleichung (54a) als Vielfaches der Abtastzeit T ausgedrückt:

$$(58) \qquad G(s) = \frac{A}{(s + s_0)^2 + \omega_0^2} \cdot e^{-\beta_s \cdot T_s} = G_0(s) \cdot e^{-\beta_s T_s}$$

Allgemein lässt sich die Stufenübertragungsfunktion $G(z)$ für ein diskretisiertes Modell einer kontinuierlichen Regelstrecke mit der Übertragungsfunktion $G(s)$ nach Gleichung (59) berechnen:

$$(59) \qquad G(z) = \frac{z-1}{z} \cdot Z\left\{\frac{G(s)}{s}\right\}$$

Mit den folgenden Abkürzungen nach Gleichungen (59a) bis (59e)

$$(59a) \qquad K_S = \frac{A}{s_0^2 + \omega_0^2}$$

$$(59b) \qquad b_1 = 1 - e^{-s_0 \cdot T} \cdot \cos(\omega_0 \cdot T) - \frac{s_0}{\omega_0} \cdot e^{-s_0 \cdot T} \cdot \sin(\omega_0 \cdot T)$$

$$(59c) \qquad b_2 = e^{-2 \cdot s_0 \cdot T} - e^{-s_0 \cdot T} \cdot \cos(\omega_0 \cdot T) + \frac{s_0}{\omega_0} \cdot e^{-s_0 \cdot T} \cdot \sin(\omega_0 \cdot T)$$

$$(59d) \qquad a_1 = 2 \cdot e^{-s_0 \cdot T} \cdot \cos(\omega_0 \cdot T)$$

$$(59e) \qquad a_2 = -e^{-2 \cdot s_0 \cdot T}$$

ergibt sich die Stufenübertragungsfunktion G(z) für den Schwinger 190 aus den Gleichungen (58) und (59) nach Gleichung (60):

$$(60) \qquad G(z) = K_S \cdot \frac{b_1 \cdot z + b_2}{z^2 - a_1 \cdot z - a_2} \cdot \frac{1}{z^{\beta_i}} = G_0(z) \cdot \frac{1}{z^{\beta_i}}$$

Nach einer Ausführungsform der Erfindung wird die Reglertotzeit $T_R$ so bestimmt, dass der Phasenfrequenzgang des korrigierten offenen Kreises bei der Resonanzkreisfrequenz $\omega_0$ einen Phasensprung von +90° nach -90° zu höheren Frequenzen hin aufweist. Die Z-Übertragungsfunktion für den korrigierten offenen Kreis ergibt sich analog zur Gleichung (51) aus der Multiplikation der Streckenübertragungsfunktion G(z) nach Gleichung (58) mit der Reglerübertragungsfunktion $G_R(z)$ nach Gleichung (57):

$$(61) \qquad G_K(z) = G_0(z) \cdot G_{R0}(z) \cdot z^{-(\beta_S + \beta_D)}$$

Analog zu den Gleichungen (52a) und (52b) wird der Reglerparameter $\beta_D$ so gewählt, dass bei der Resonanzkreisfrequenz $\omega_0$ die Übertragungsfunktion des korrigierten offenen Kreises $G_k(z)$ einen Phasensprung von +90° nach -90° aufweist:

$$(62a) \qquad \left(\beta_S + \beta_D + \frac{1}{2}\right) \cdot \omega_0 \cdot T = \frac{3}{2} \cdot \pi$$

Im Vergleich mit Gleichung (52a) ergibt sich gegenüber dem kontinuierlichen Regler ein zusätzlicher Anteil von $\frac{1}{2}\omega_0 T$, der eine auf die Diskretisterung zurückzuführende Verzögerung von einem zusätzlichen, halben Abtasttakt wiedergibt. Wie auch im Fall des kontinuierlichen Reglers kann, sofern die durch die Streckentotzeit $\beta_S \cdot T$ und die Diskretisierung hervorgerufene Phasenverschiebung bei der Resonanzkreisfrequenz $\omega_0$ kleiner als 90° ist, ein Phasensprung von 180° auch durch ein Minuszeichen im Regler erzeugt werden, so dass sich die durch die Diskretisierung, die Reglertotzeit $\beta_D \cdot T$ und die Streckentotzeit $\beta_S \cdot T$ hervorgerufenen Phasen bei der Resonanzkreisfrequenz $\omega_0$ lediglich zu $\pi/2$ ergänzen müssen. Entsprechend ergibt sich für diesen Fall für $\beta_D$ die Dimensionierungsvorschrift nach Gleichung (62b):

$$(62b) \qquad \left(\beta_S + \beta_D + \frac{1}{2}\right) \cdot \omega_0 \cdot T = \frac{\pi}{2} \cdot$$

Die Gleichungen (62a) und (62b) führen in der Regel zu einem nicht ganzzahligen Wert für $\beta_D$. Im Allgemeinen weist der Reglerparameter $\beta_D$ einen ganzzahligen Anteil $n_D$ und einen Rest $1/a_D$ mit $a_D > 1$ gemäß Gleichung (63) auf:

$$(63) \qquad \beta_D = n_D + \frac{1}{a_D}$$

Gemäß einer Ausführungsform wird der ganzzahlige Anteil $n_D$ durch eine Verzögerungskette entsprechend der durch $n_D$ angegebenen Länge und der Bruchteil $1/a_D$ eines Abtasttaktes durch einen Allpass erster Ordnung gemäß Gleichung (64) approximiert:

$$(64) \qquad z^{-\frac{1}{a_0}} \cong \frac{\alpha_D \cdot z + 1}{z + \alpha_D}$$

Gemäß einer Ausführungsform wird der Parameter $\alpha_D$ des Allpasses so gewählt, dass die Phase der exakten Übertragungsfunktion $z^{-a_0^{-1}}$ und die Phase der Allpass-Approximation nach Gleichung (64) bei der Resonanzkreisfrequenz $\omega_0$ möglichst exakt übereinstimmen. Aus dieser Bedingung ergibt sich als Bestimmungsgleichung für den Parameter $\alpha_D$ des Allpasses die Gleichung (65):

$$(65) \qquad -\frac{\omega_0 \cdot T}{a_D} = \arctan(\frac{\alpha_D \cdot \sin(\omega_0 \cdot T)}{\alpha_D \cdot \cos(\omega_0 \cdot T) + 1}) - \arctan(\frac{\sin(\omega_0 \cdot T)}{\cos(\omega_0 \cdot T) + \alpha_D})$$

Gemäß einer Ausführungsform wird $\alpha_D$ dadurch bestimmt, dass per Intervallschachtelung die Nullstelle der Funktion gemäß Gleichung (66) mittelt wird:

$$(66) \qquad f(\alpha_D) = \arctan(\frac{\alpha_D \cdot \sin(\omega_0 \cdot T)}{\alpha_D \cdot \cos(\omega_0 \cdot T) + 1}) - \arctan(\frac{\sin(\omega_0 \cdot T)}{\cos(\omega_0 \cdot T) + \alpha_D}) + \frac{\omega_0 \cdot T}{a_D}$$

Die Bestimmung von $n_D$ und $a_D$ nach Gleichung (63) und (66) ist unabhängig von der Art der Bestimmung der weiteren Reglerparameter $K_P$ und $K_I$.

Gemäß einer Ausführungsform eines Verfahrens zur Herstellung einer Reglereinheit, das die Dimensionierung des diskreten PI-Reglers 325 nach Figur 4A umfasst, werden der Verstärkungsfaktor $K_P$ und der Integrierbeiwert K, des diskreten PI-Reglers 325 so gewählt, dass die Reglernullstellen in der Reglerübertragungsfunktion $G_R(z)$ gemäß Gleichung (57) den konjugiert komplexen Streckenpol der Streckenübertragungsfunktion G(z) gemäß Gleichung (60) kompensieren. Ein Koeffizientenvergleich zwischen den Gleichungen (57) und (60) bezüglich $z^1$ führt zur Dimensionierungsvorschrift nach Gleichung (67):

$$(67) \qquad K_P \overset{!}{=} K_I \cdot T \cdot \frac{e^{-s_0 \cdot T}}{1 - e^{-s_0 \cdot T}}$$

Der Koeffizientenvergleich für $z^0$ führt zur Dimensionierungsvorschrift nach Gleichung (68):

$$(68) \qquad K_P \overset{!}{=} K_I \cdot T \cdot \frac{1 + e^{-2 \cdot s_0 \cdot T}}{1 - e^{-2 \cdot s_0 \cdot T}}$$

Gemäß einer Ausführungsform werden die Dämpfung $s_0$ des Schwingers 190 und die Abtastzeit T so gewählt, dass $s_0 \cdot T \ll 1$ gilt, so dass hinreichend genau die Näherungen nach (69a) und (69b) gelten:

$$(69a) \qquad e^{-s_0 \cdot T} \cong 1 - s_0 \cdot T$$

$$(69b) \qquad e^{-2 \cdot s_0 \cdot T} \cong 1 - 2 \cdot s_0 \cdot T$$

Mit den Näherungen gemäß den Gleichungen (69a) und (69b) lassen sich die beiden unabhängigen Dimensionierungsvorschriften gemäß den Gleichungen (67) und (68) durch eine einzige Dimensionierungsvorschrift nach Gleichung (70) annähern:

$$(70) \qquad K_P \overset{!}{=} K_I \cdot T \cdot \frac{1 - s_0 \cdot T}{s_0 \cdot T} \quad \text{bzw.} \quad K_I \cdot T \overset{!}{=} K_P \cdot s_0 \cdot T.$$

Gemäß einer Ausführungsform wird das Verhältnis des Integrierbeiwerts $K_I$ zum Verstärkungsfaktor $K_P$ gleich oder annähernd gleich der Dämpfung $s_0$ des Schwingers gesetzt. Die Dimensionierung des diskreten PI-Reglers 325 gemäß dem beschriebenen Verfahren, das die Kompensation des Streckenpols durch die Reglernullstelle vorsieht, führt zu einem guten Führungsverhalten des geschlossenen Kreises.

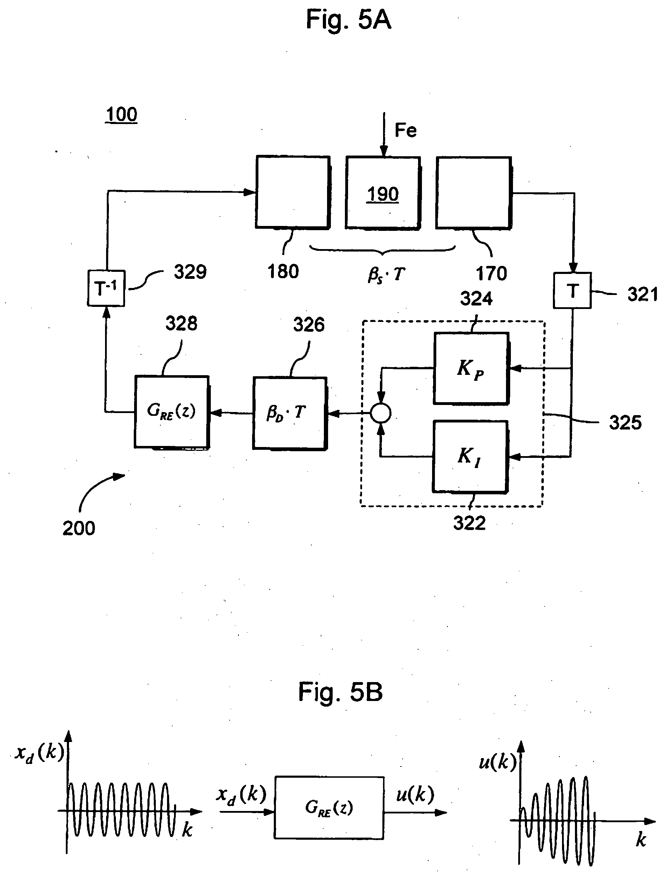

Die Figuren 5A und 5B beziehen sich auf eine Ausführungsform, bei der die Regler-Haupteinheit 200 eine Reglererweiterung 328 aufweist, die in Reihe zu dem PI-Regler 325 und dem Totzeitglied 326 gemäß der Figur 4A angeordnet ist. Im Folgenden wird die Struktur der Reglererweiterung 328 aus einer analogen Reglererweiterung für das Basisband abgeleitet.

Beispielsweise kann der Schwinger 190 neben der Resonanzkreisfrequenz bei $\omega_0$ noch weitere Resonanzen aufweisen, beispielsweise mechanische Strukturresonanzen oberhalb oder unterhalb der Resonanzkreisfrequenz $\omega_0$. Die Reglererweiterung 328 wird so ausgelegt, dass sie diese weiteren Resonanzen stärker bedämpft. Zu diesem Zweck würde im Basisband einem konventionellen PI-Regler ein Verzögerungsglied erster Ordnung (PT$_I$-Glied) mit einem weiteren Pol bei einer Knickfrequenz Jenseits der gewünschten Bandbreite hinzufügt werden. Dieser zusätzliche Reglerpol bewirkt, dass der Regler für hohe Frequenzen nicht mehr als Proportionalglied wirkt, sondern dass dessen Betragsfrequenz mit 20 dB/Dekade abfällt. Die Sprungantwort y(k) einer solchen Erweiterung im Basisband ergibt sich aus der Sprungfunktion $\sigma(k)$ als Eingangssignal u(k) nach Gleichung (71):

$$(71) \qquad y(k) = (1 - e^{-\frac{k \cdot T}{T_I}}) \cdot \sigma(k)$$

Die z-Transformierte U(z) des Eingangssignals u(k) entspricht der z-Transformierten des Sprungsignals:

$$(72a) \qquad U(z) = \frac{z}{z-1}$$

Die z-Transformierte Y(z) des Ausgangssignals y(k) ergibt sich nach Gleichung (72b):

$$(72b) \qquad Y(z) = \frac{z}{z-1} - \frac{z}{z - e^{-\frac{T}{T_I}}}$$

Analog der Gleichung (47) ergibt sich demnach für die Übertragungsfunktion $G_{REO}(z)$ einer solchen Reglererweiterung Im Basisband:

$$(73) \qquad G_{REO}(z) = \frac{1 - e^{-\frac{T}{T_I}}}{z - e^{-\frac{T}{T_I}}}$$

Gemäß einer Ausführungsform wird nun in Analogie zur Reglererweiterung im Basisband die Reglererweiterung 328 im Bandpassband so ausgebildet, dass die Reglererweiterung 328 auf eine Beaufschlagung mit einer durch die Sprungfunktion modulierten harmonischen Schwingung der Resonanzkreisfrequenz $\omega_0$ mit einer harmonischen Schwingung der gleichen Frequenz antwortet, wobei die Sprungantwort der Basisbanderweiterung die Hüllkurve vorgibt, wie es auf der rechten Seite der Figur 5B dargestellt ist.

Die Figur 5B zeigt das Transformieren einer sinusmodulierten Sprungfunktion u(k) auf ein Ausgangssignal mit einer Sinusschwingung, dessen Hüllkurve sich aus der Sprungantwort gemäß der Übertragungsfunktion $G_{REO}(z)$ der diskreten Reglererweiterung im Bandpassband ergibt. Das Eingangssignal der Reglererweiterung 328 im Bandpassband mit der Übertragungsfunktion $G_{RE}(z)$ ergibt sich nach Gleichung (74):

$$(74) \qquad u(k) = \sin(\omega_0 \cdot T \cdot k) \cdot \sigma(k)$$

Das Reglerausgangssignal y(k) ist eine harmonische Schwingung, dessen Hüllkurve der Sprungantwort der PT$_I$-Reglererweiterung im Basisband entspricht:

$$(75) \qquad y(k) = (1 - e^{-\frac{k \cdot T}{T_I}}) \cdot \sin(\omega_0 \cdot T \cdot k) \cdot \sigma(k)$$

Die z-Transformierten U(z) und Y(z) ergeben sich nach den Gleichungen (76a) und (76b):

$$(76a) \qquad U(z) = \frac{z \cdot \sin(\omega_0 \cdot T)}{z^2 - 2 \cdot \cos(\omega_0 \cdot T) \cdot z + 1}$$

$$(76b) \qquad Y(z) = z \cdot \frac{\sin(\omega_0 \cdot T)}{z^2 - 2 \cdot \cos(\omega_0 \cdot T) \cdot z + 1} - z \cdot \frac{e^{-\frac{T}{T_I}} \cdot \sin(\omega_0 \cdot T)}{z^2 - 2 \cdot e^{-\frac{T}{T_I}} \cdot \cos(\omega_0 \cdot T) \cdot z + e^{-2\frac{T}{T_I}}}$$

Die Übertragungsfunktion G$_{RE}$(z) der Reglererweiterung 328 für das Bandpassband ergibt sich nach Gleichung (77):

$$(77) \qquad G_{RE}(z) = \frac{Y(z)}{U(z)} = \frac{(1 - e^{-\frac{T}{T_I}}) \cdot z^2 - e^{-\frac{T}{T_I}} \cdot (1 - e^{-\frac{T}{T_I}})}{z^2 - 2 \cdot e^{-\frac{T}{T_I}} \cdot \cos(\omega_0 \cdot T) \cdot z + e^{-2\frac{T}{T_I}}}$$

Die Reglererweiterung 328 mit der Übertragungsfunktion G$_{RE}$(z) wirkt in Reihe zum diskreten PI-Regler 325 ähnlich einem Bandpass erster Ordnung mit der Resonanzkreisfrequenz $\omega_0$ als Mittenfrequenz. Betrag und Phase des korrigierten offenen Kreises bei der Resonanzkreisfrequenz $\omega_0$ in einem schmalen Bereich um die Resonanzkreisfrequenz $\omega_0$ gemäß Gleichung (78) bleiben unverändert.

$$(78) \qquad \omega_0 - \frac{1}{T_1} \leq \omega \leq \omega_0 + \frac{1}{T_1}$$

In diesem Bereich wird der Betragsfrequenzgang des korrigierten offenen Kreises kaum beeinflusst, während außerhalb dieses Bereichs eine deutliche Betragsabsenkung stattfindet, so dass mögliche unerwünschte Resonanzen abgesenkt werden können.

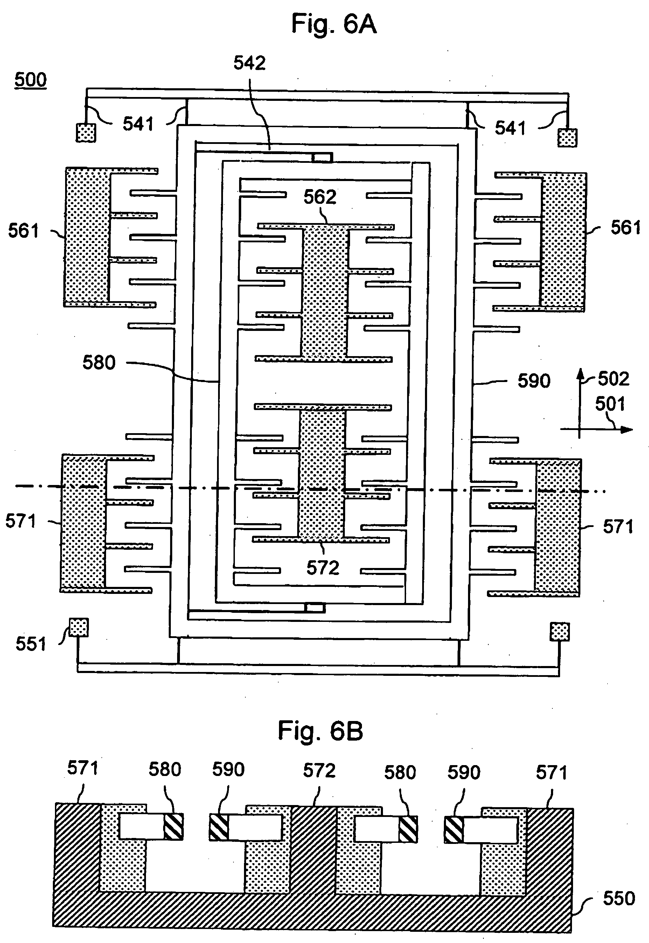

Die Figuren 6A bis 6C beziehen sich auf einen mikromechanischen Drehratensensor 500 gemäß einer weiteren Ausführungsform. Der Drehratensensor 500 umfasst eine an ersten Federelementen 541 aufgehängte Anregungseinheit 590, z.B einen Anregungsrahmen. Die ersten Federelemente 541 koppeln die Anregungseinheit 590 an eine Aufhängestruktur 551, die fest mit einem in der Figur 5B dargestellten Trägersubstrat 550 verbunden ist. Die Federelemente 541 dämpfen eine Auslenkung der Anregungseinheit 590 gegenüber dem Trägersubstrat 550 entlang der Anregungsrichtung 501 nur schwach. Über zweite Federelemente 542 ist eine Detektionseinheit 580 an die Anregungseinheit 590 gekoppelt und gegenüber der Anregungseinheit 590 hauptsächlich entlang einer zur Anregungsrichtung 501 orthogonalen Detektionsrichtung 502 beweglich. Anregungs- und Detektionsrichtung 501, 502 verlaufen parallel zu einer Oberfläche des Trägersubstrats 550. Die ersten und zweiten Federelemente 541, 542 sind beispielsweise balkenähnliche Strukturen mit kleinem Querschnitt, die zwischen den jeweils zu koppelnden Strukturen ausgebildet sind.

Gemäß einer Ausführungsform umfasst der Drehratensensor 500 erste Kraftgeber- und Sensoreinheiten 561. 571, z.B. elektrostatische Kraftgeber und Sensoren, die das aus der Anregungseinheit 590 und der Detektionseinheit 580 gebildete System zu einer Schwingung entlang der Anregungsrichtung 501 anregen und/oder eine entsprechende Auslenkung der Anregungseinheit 590 zu erfassen vermögen. Der Drehratensensor 500 umfasst ferner zweite Kraftgeber- und Sensoreinheiten 562, 572 z.B. elektrostatische Kraftgeber und Sensoren, die auf die Detektionseinheit 580 einzuwirken und/oder deren Auslenkung zu erfassen vermögen. Nach einer Ausführungsform wird mindestens eine der zweiten Kraftgeber- und Sensoreinheiten 562, 572 derart angesteuert, dass sie einer durch eine Störgröße oder, im Falle von closed-loop Systemen, einer durch die Messgröße bewirkten Auslenkung der Detektionseinheit 580 entgegenwirkt.

Im Betrieb des Drehratensensors 500 regen beispielsweise die ersten Kraftgeber- und Sensoreinheiten 561. 571 die Anregungseinheit 590 zu einer Schwingung entlang der Anregungsrichtung 501 an, wobei sich die Detektionseinheit 580 näherungsweise mit derselben Amplitude und Phase mit der Anregungseinheit 590 mitbewegt. Wird die Anordnung um eine zur Substratebene orthogonale Achse gedreht, so wirkt auf die Anregungseinheit 590 und die Detektionseinheit 580 eine Corioliskraft, die die Detektionseinheit 580 relativ zur Anregungseinheit 590 in die Detektionsrichtung 502 auslenkt. Die zweiten Kraftgeber- und Sensoreinheiten 562, 572 erfassen die Auslenkung der Detektionseinheit 580 und damit die Drehbewegung um die zur Substratebene orthogonale Achse.

Gemäß einer Ausführungsform wirkt mindestens eine der Kraftgeber- und Sensoreinheiten 561, 571, 562. 572 als Aktuator und entweder die Anregungseinheit 590 oder die Detektionseinheit 580 als Schwinger im Sinne einer der im Vorhergehenden beschriebenen Vorrichtungen 200.

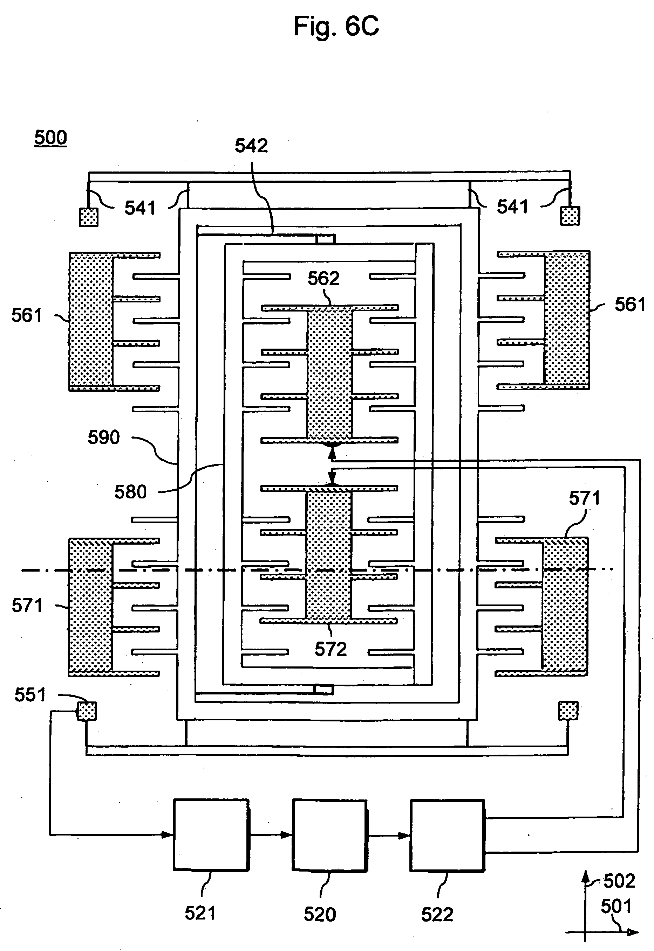

Gemäß einer in der Figur 6C dargestellten Ausführungsform des Drehratensensors 500 regen beispielsweise die ersten Kraftgeber- und Sensoreinheiten 561. 571 die Anregungseinheit 590 zu einer Schwingung mit der Resonanzkreisfrequenz $\omega_0$ entlang der Anregungsrichtung 501 an. In einem Regelkreis mit einer Regler-Haupteinheit 200 und einer Regler-Ergänzungseinheit 600 der oben besprochenen Art kann dann beispielsweise eine Schwingung der Detektionseinheit 580 entlang der Detektionsrichtung 502 (x2-Schwinger) dem harmonischen Kraftsignal wie oben beschrieben entsprechen.

Die Auslenkung des x2-Schwingers kann über die Ladung auf der gemeinsamen beweglichen Elektrode erfasst werden, die auf der Anregungseinheit 590 ausgebildet ist. Die Ladung kann über eine der Aufhängestrukturen 551 abgegriffen werden. Eine Ladungsverstärkungseinheit 521 verstärkt das abgegriffene Signal. Während üblicherweise eine Demodulatoreinheit das abgegriffene Signal mit einer Frequenz, die beispielsweise der Resonanzkreisfrequenz $\omega_0$ entspricht, demoduliert, bevor es einer Reglereinheit zugeführt wird, sehen es die Ausführungsformen der Erfindung vor, einer Reglereinheit 520 der oben besprochenen Art das nicht demodulierte, harmonische Signal als Messsignal im obigen Sinne zuzuführen.

Die für die Schwingung wirksame Dämpfung $s_0$ ist wesentlich kleiner als die Resonanzkreisfrequenz $\omega_0$. Das über den Anregungsrahmen bzw. die Anregungseinheit 590 abgegriffene Signal bildet teilweise die Bewegung der Anregungseinheit 590 entlang der Anregungsrichtung 501 mit ab. Eine Störgröße, deren Quelle außerhalb des Drehratensensors 500 liegen kann, bzw., in einem closed-loop Systems, die Messgröße, überlagert sich der Schwingung und moduliert deren Amplitude. Die Reglereinheit 520 leitet aus dem modulierten, harmonischen Signal ein Steuersignal für die zweiten Kraftgeber- und Sensoreinheiten 562, 572 ab, das bewirkt, dass diese der durch die Störgröße bzw. durch die Messgröße bewirkten Auslenkung entgegenwirken. Eine Verstärkereinheit 522 wandelt das Steuersignal in ein geeignetes Rückstelisignal für die Elektroden der zweiten Kraftgeber- und Sensoreinheiten 562, 572 um. Die Reglereinheit 520 umfasst jeweils eine der oben beschriebenen Regler-Haupteinheiten 200 und Regler-Ergänzungseinheiten 600.

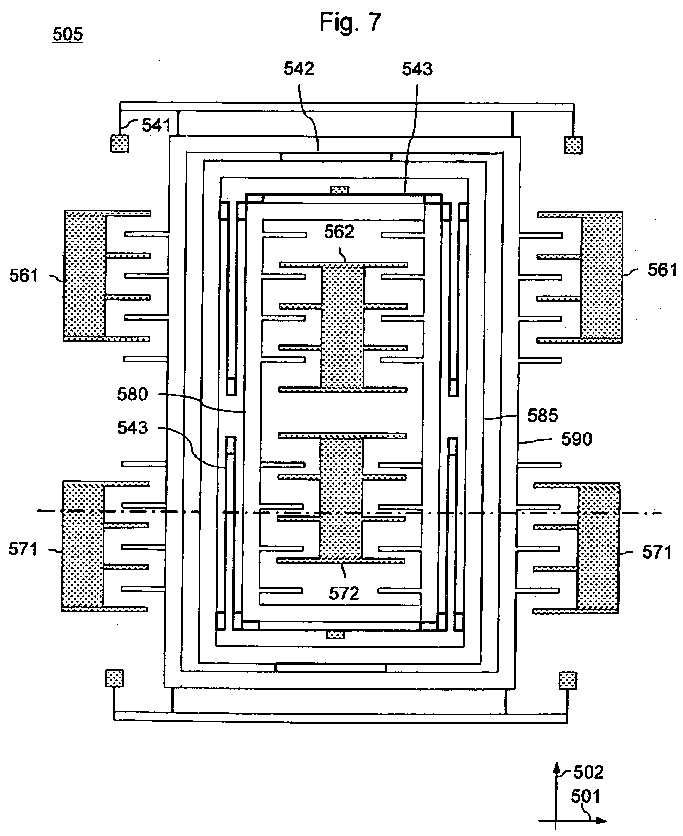

Der in der Figur 7 dargestellte Drehratensensor 505 unterscheidet sich von dem in der Figur 6A dargestellten Drehratensensor 500 durch eine zwischen der Anregungseinheit 590 und der Detektionseinheit 580 angeordnete Corioliseinheit 585. Zweite Federelemente 542, die die Corioliseinheit 585 an die Anregungseinheit 590 koppeln, lassen eine Auslenkung der Corioliseinheit 585 relativ zur Anregungseinheit 590 in der Detektionsrichtung 502 zu. Dritte Federelemente 543, die teilweise mit dem Trägersubstrat 550 verbunden sein können, koppeln die Detektionseinheit 580 derart an die Corioliseinheit 585, dass die Detektionseinheit 580 der Bewegung der Corioliseinheit 585 entlang der Detektionsrichtung 502, nicht aber entlang der Anregungsrichtung 501 folgen kann. Die Detektionseinheit 580 ist bezüglich der Anregungsrichtung 501 fixiert und in der Detektionsrichtung 502 beweglich.

Gemäß anderen Ausführungsformen wirkt mindestens eine der ersten oder zweiten Kraftgeber- und Sensoreinheiten 561, 562, 571, 572 als Aktuator, und entweder die Anregungseinheit 590 oder die Detektionseinheit 580 oder sowohl die Anregungsseinheit 590 und die Detektionseinheit 580 als Schwinger im Sinne einer der im Vorhergehenden beschriebenen Vorrichtungen, die nach dem beschriebenen Prinzip des Bandpassreglers betrieben. Dabei wirken die Kraftgeber- und Sensoreinheiten 561 und 571 als Kraftgeber- bzw. Sensoreinheit für den x1-Schwinger und die Kraftgeber- und Sensoreinheiten 562 und 572 als Kraftgeber- bzw. Sensoreinheiten für den x2-Schwinger.

Ein Drehratensensor gemäß einer anderen Ausführungsform umfasst zwei der in der Figur 6A oder in der Figur 7 dargestellten Anordnungen, die untereinander derart gekoppelt sind, dass die Anregungseinheiten im stationären Zustand einander entgegengesetzte Schwingungen ausführen. Andere Ausführungsformen betreffen Drehratensensoren mit vier der in der Figur 6A oder in der Figur 7 dargestellten Anordnungen, die untereinander derart gekoppelt sind, dass jeweils zwei der Anregungseinheiten im stationären Zustand einander entgegengesetzte Schwingungen ausführen.

Eine weitere Ausführungsform bezieht sich auf eine Drehratensensoreinrichtung mit der in den Figuren 1, 2A und 2B dargestellten Kombination aus Regler-Haupteinheit 200 und Regler-Ergänzungseinheit 600. Die Regler-Haupteinheit 200 umfasst mindestens einen PI-Regler 225, 325 für harmonische Sollwertsignale, der seinerseits ein proportionales Übertragungsglied 224, 324 und ein zum proportionalen Übertragungsglied 224, 324 parallel angeordnetes integrierendes Übertragungsglied 222, 322 aufweist, wobei ein Reglereingang der Regler-Haupteinheit 200 mit beiden Übertragungsgliedern 222, 224, 322, 324 verbunden ist. Die Übertragungsfunktion des PI-Reglers 225, 325 für harmonische Sollwertsignale weist einen konjugiert komplexen Pol bei einer Reglerkreisfrequenz $\omega_r$ in der s-Ebene oder bei $e^{\pm j\omega_r T}$ in der z-Ebene auf, wobei T die Abtastzeit eines diskreten Eingangssignals des PI-Reglers 325 und $\omega_r$ größer 0 ist.

Dazu sind ein Integrierbeiwert des integrierenden Übertragungsglieds 222, 322 und ein Verstärkungsfaktor des proportionalen Übertragungsglieds 224. 324 so gewählt, dass der PI-Regler 225, 325 für harmonische Führungsgrößen bei Beaufschlagung mit einem durch die Sprungfunktion modulierten harmonischen Eingangssignal der Reglerkreisfrequenz $\omega_r$ am Reglereingang zur Erzeugung einer harmonische Schwingung der Reglerkreisfrequenz $\omega_r$ mit steigender Amplitude an einem Reglerausgang geeignet ist.

Der PI-Regler 225, 325 für harmonische Sollwertsignale kann als ein vom konventionellen PI-Regler für stationäre Sollwertsignale abgeleiteter Regler aufgefasst werden und unterscheidet sich von diesem durch die Lage der Pole in der s- bzw. z-Ebene.

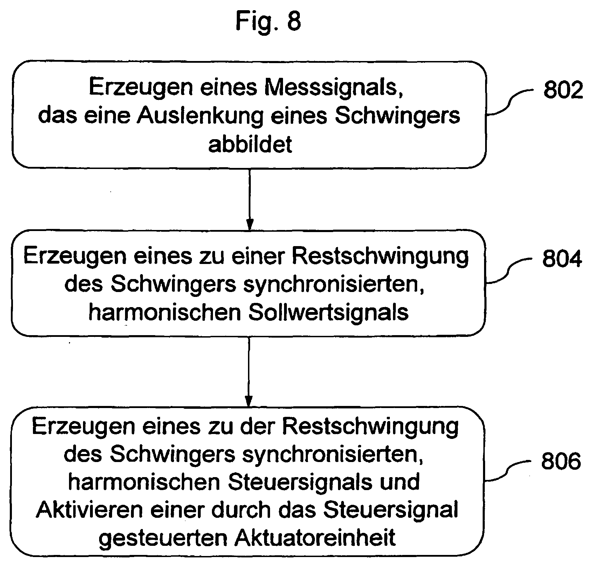

Figur 8 bezieht sich auf ein Verfahren zum Betrieb einer Regelungsvorrichtung mit harmonischer Führungsgröße. Eine Sensoreinheit erzeugt ein Messsignal, das eine Auslenkung eines Schwingers entlang einer Anregungsrichtung abbildet (802). Eine Regler-Erweiterungseinheit erzeugt auf Basis einer Schätzung einer Ist-Phase und einer Ist-Amplitude einer Restschwingung des Schwingers bei deaktivierter Aktuatoreinheit (804) ein phasensynchrones und amplitudengleiches harmonisches Sollwertsignal. Eine Regler-Haupteinheit erzeugt aus dem Messsignal und dem synchronen Sollwertsignal ein synchronisiertes Steuersignal für die Aktuatoreinheit, so dass die Aktuatoreinheit der Abweichung des Schwingers von einer harmonischen Schwingung entgegenwirken kann. Mit oder nach Bereitstellen des synchronisierten Steuersignals wird die Aktuatoreinheit aktiviert (806).

**Patentansprüche**

1. Eine Regelungsvorrichtung umfassend
   eine Sensoreinheit (170), die zur Ausgabe eines eine Auslenkung eines Schwingers (190) entlang einer Anregungsrichtung abbildenden Messsignals ausgestaltet ist,
   eine auf den Schwinger (190) wirkende Aktuatoreinheit (180), die durch Steuersignale steuerbar ist, **gekennzeichnet durch**
   eine Regler-Haupteinheit (200), die dazu ausgestaltet ist, aus dem Messsignal und einem harmonischen Sollwertsignal ein Steuersignal für die Aktuatoreinheit (180) derart abzuleiten, dass die Aktuatoreinheit (180) einer Abweichung der Auslenkung des Schwingers (190) von einer Soll-Amplitude einer harmonischen Resonanzschwingung des Schwingers (190) entgegenwirkt, und
   eine Regler-Erweiterungseinheit (600), die dazu ausgestaltet ist, bei deaktivierter Aktuatoreinheit (180) aus dem Messsignal eine Ist-Phase und eine Ist-Amplitude einer Restschwingung des Schwingers (190) zu bestimmen und an die Regler-Haupteinheit (200) ein an die Ist-Phase und die Ist-Amplitude angepasstes harmonisches Sollwertsignal auszugeben, so dass nach Aktivieren der Aktuatoreinheit (180) eine Amplitude der Restschwingung des Schwingers (190) phasensynchron bis zu einer Soll-Amplitude verstärkt und dabei in der Restschwingung enthaltene Energie ausgenutzt wird.

2. Die Regelungsvorrichtung nach Anspruch 1, **dadurch gekennzeichnet,**
   **dass** die Regler-Haupteinheit (200) eine Reglereinrichtung (225, 325) für harmonische Sollwertsignale ist, wobei die Reglereinrichtung (225, 325) mindestens ein proportionales Übertragungsglied (224, 324) und ein zum proportionalen Übertragungsglied (224. 324) parallel angeordnetes integrierendes Übertragungsglied (222. 322) umfasst und ein Reglereingang der Regler-Haupteinheit (200) mit beiden Übertragungsgliedern (222, 224. 322, 324) verbunden ist, und
   eine Übertragungsfunktion der Reglereinrichtung (225, 325) einen konjugiert komplexen Pol bei einer Reglerkreisfrequenz $\omega_r$ in der s-Ebene oder einen Pol bei $e^{\pm j\omega_r T}$ in der z-Ebene aufweist, wobei T die Abtastzeit eines diskreten Eingangssignals der Reglereinrichtung (225, 325) und $\omega_r$ größer 0 ist.

3. Die Regelungsvorrichtung nach Anspruch 2, **dadurch gekennzeichnet,**
   **dass** ein Integrierbeiwert des integrierenden Übertragungslieds (222, 322) und ein Verstärkungsfaktor des proportionalen Übertragungsglieds (224, 324) so gewählt sind, dass die Reglereinrichtung (225, 325) bei Beaufschlagung mit einem durch die Sprungfunktion modulierten harmonischen Eingangssignal der Reglerkreisfrequenz $\omega_r$ am Reglereingang zur Erzeugung einer harmonische Schwingung der Reglerkreisfrequenz $\omega_r$ mit steigender Amplitude an einem Reglerausgang ausgestaltet ist.

4. Die Regelungsvorrichtung nach Anspruch 3. **dadurch gekennzeichnet,**
   **dass** der Integrierbeiwert und der Verstärkungsfaktor so gewählt sind, dass die Nullstellen der Übertragungsfunktion der Reglereinrichtung (225, 325) Pole einer Übertragungsfunktion des Schwingers (190) kompensieren.

**5.** Die Regelungsvorrichtung nach einem der Ansprüche 1 bis 4, **dadurch gekennzeichnet, dass** die Regler-Erweiterungseinheit (600) aufweist:

eine Erfassungseinheit (610), die dazu ausgestaltet ist, aus dem Messsignal die Ist-Phase und die Ist-Amplitude der Restschwingung des Schwingers (190) zu bestimmen und aus der Ist-Phase und der Ist-Amplitude eine Synchronisationsinformation für das harmonische Sollwertsignal so zu bestimmen, dass durch die Aktuatoreinheit (180) eine Amplitude der Restschwingung des Schwingers (190) phasensynchron verstärkt und in der Restschwingung enthaltene Energie ausnutzbar wird; und
eine Synchronisiereinheit (620), die dazu ausgestaltet ist, die Synchronisationsinformation zu empfangen und auf Basis der Synchronisationsinformation eine Phase und einen Anfangs-Amplitudenwert des harmonischen Sollwertsignals festzulegen.

**6.** Die Regelungsvorrichtung nach Anspruch 5, **dadurch gekennzeichnet, dass** die Erfassungseinheit (610) aufweist;
eine Filtereinheit (612), die dazu ausgestaltet ist, aus dem Messsignal, einem Schätzwert für die momentane Schwingungsfrequenz, einem Schätzwert für die Varianz eines im Messsignal enthaltenen Messrauschens und einem Schätzwert für einen konstanten Amplituden-Offset des Messsignals Schätzwerte für einen Zeitverlauf der Restschwingung zu ermitteln; und
eine Steuereinheit (616), die dazu ausgestaltet ist, aus den Schätzwerten für den Zeitverlauf der Restschwingung die die Ist-Phase und die Ist-Amplitude beschreibende Synchronisationsinformation zu ermitteln und auszugeben.

**7.** Die Regelungsvorrichtung nach Anspruch 6, **dadurch gekennzeichnet,**
**dass** die Steuereinheit (616) dazu ausgestaltet ist, nach der Ausgabe der Synchronisationsinformation die Filtereinheit (612) zu deaktivieren.

**8.** Die Regelungsvorrichtung nach einem der Ansprüche 6 oder 7, **dadurch gekennzeichnet,**
**dass** die Steuereinheit (616) dazu ausgestaltet ist, nach der Ausgabe der Synchronisationsinformation die Aktuatoreinheit (180) zu aktivieren.

**9.** Die Regelungsvorrichtung nach einem der Ansprüche 6 bis 8, **dadurch gekennzeichnet,**
**dass** die Regler-Erweiterungseinheit (600) dazu ausgestaltet ist, die Amplitude der Sollwertschwingung innerhalb einer vorgegebenen Zeitspanne von dem Anfangs-Amplitudenwert auf einen Soll-Amplitudenwert zu erhöhen.

**10.** Die Regelungsvorrichtung nach einem der Ansprüche 1 bis 9, **dadurch gekennzeichnet,**
**dass** die Filtereinheit (612) ein Kalman-Filter ist.

**11.** Die Regelungsvorrichtung nach einem der Ansprüche 1 bis 10. **dadurch gekennzeichnet, dass**
die Regler-Erweiterungseinheit (600) eine Frequenzspeichereinheit (630) umfasst, die dazu ausgestaltet ist, eine Frequenzinformation, die eine aktuelle Schwingfrequenz des Schwingers (190) beschreibt, in zeitlichen Abständen abzuspeichern und
die Regler-Ergänzungseinheit (600) weiter dazu ausgestaltet ist, die abgespeicherte Frequenzinformation zur Schätzung der Ist-Phase und der Ist-Amplitude der Restschwingung des Schwingers (190) und/oder zur Generierung des harmonischen Sollwertsignals zu verwenden.

**12.** Die Regelungsvorrichtung nach einem der Ansprüche 1 bis 11. **dadurch gekennzeichnet, dass**
die Regelungsvorrichtung Teil eines Drehratensensors (500. 505) ist, der Schwinger als eine Anregungseinheit (590), eine Corioliseinheit (585) oder eine Detektionseinheit (580) ausbildet und die Aktuatoreinheit ein Kraftgeber (561) ist,
die Corioliseinheit (585) an der Anregungseinheit (590) derart befestigt ist, dass die Corioliseinheit (585) einer Bewegung der Anregungseinheit (590) entlang der Anregungsrichtung folgt und zusätzlich entlang einer zur Anregungsrichtung senkrechten Detektionsrichtung beweglich ist, und
die Detektionseinheit (580) derart an der Anregungseinheit (590) oder an der Corioliseinheit (585) befestigt ist, dass die Detektionseinheit (580) entweder
einer Bewegung der Anregungseinheit (590) entlang der Anregungsrichtung folgt und zusätzlich entlang einer zur Anregungsrichtung senkrechten Detektionsrichtung beweglich ist, oder
einer Bewegung der Corioliseinheit (585) entlang einer zur Anregungsrichtung senkrechten Detektionsrichtung folgt und entlang der Anregungsrichtung fixiert ist.

**13.** Ein Drehratensensor umfassend

einen beweglich gelagerten Schwinger (190), der in einer Anregungsrichtung zu einer harmonischen Resonanzschwingung anregbar ist,

eine Sensoreinheit (170), die zur Ausgabe eines eine Auslenkung des Schwingers (190) entlang der Anregungsrichtung abbildenden Messsignals ausgestaltet ist,

eine auf den Schwinger (190) wirkende Aktuatoreinheit (180), die durch Steuersignale steuerbar ist, **gekennzeichnet durch**

eine Regler-Haupteinheit (200), die dazu ausgestaltet ist, aus dem Messsignal und einem harmonischen Sollwertsignal ein Steuersignal für die Aktuatoreinheit (180) derart abzuleiten, dass die Aktuatoreinheit (180) einer Abweichung der Auslenkung des Schwingers (190) von einer Soll-Amplitude der Resonanzschwingung entgegenwirkt, und

eine Regler-Erweiterungseinheit (600), die dazu ausgestaltet ist, bei deaktivierter Aktuatoreinheit (180) aus dem Messsignal eine Ist-Phase und eine Ist-Amplitude einer Restschwingung des Schwingers (190) zu bestimmen und an die Regler-Haupteinheit (200) ein an die Ist-Phase und die Ist-Amplitude angepasstes harmonisches Sollwertsignal auszugeben, so dass nach Aktivieren der Aktuatoreinheit (180) eine Amplitude der Restschwingung des Schwingers (190) phasensynchron bis zu einer Soll-Amplitude verstärkt und dabei in der Restschwingung enthaltene Energie ausgenutzt wird.

14. Der Drehratensensor nach Anspruch 13, wobei
der Schwinger eine Anregungseinheit (590) ist, die durch einen Kraftgeber (561) entlang einer Anregungsrichtung auslenkbar und zu einer Schwingung mit einer Resonanzkreisfrequenz $\omega_0$ ausgestaltet ist.

15. Ein Verfahren zum Betrieb einer Regelungsvorrichtung mit harmonischer Führungsgröße, umfassend
Erzeugen eines eine Auslenkung eines Schwingers (190) entlang einer Anregungsrichtung abbildenden Messsignals mittels einer Sensoreinheit (170),
Erzeugen eines phasen- und amplitudensynchronen harmonischen Sollwertsignals auf Basis einer Schätzung einer Ist-Phase und einer Ist-Amplitude einer Restschwingung des Schwingers (190) bei deaktivierter Aktuatoreinheit (180).
Erzeugen eines synchronisierten Steuersignals für eine Aktuatoreinheit (180) aus dem Messsignal und dem phasen- und amplitudensynchronen harmonischen Sollwertsignal, so dass die Aktuatoreinheit (180) der Abweichung des Schwingers (190) von einer harmonischen Schwingung entgegenwirkt, und
Aktivieren der Aktuatoreinheit (180) mit oder nach Bereitstellen des synchronisierten Steuersignals.

16. Der Drehratensensor nach Anspruch 13, **dadurch gekennzeichnet,**
**dass** die Regler-Haupteinheit (200) eine Reglereinrichtung (225, 325) für harmonische Sollwertsignale ist, wobei die Reglereinrichtung (225, 325) mindestens ein proportionales Übertragungsglied (224, 324) und ein zum proportionalen Übertragungsglied (224, 324) parallel angeordnetes integrierendes Übertragungsglied (222, 322) umfasst und ein Reglereingang der Regler-Haupteinheit (200) mit beiden Übertragungsgliedern (222, 224, 322. 324) verbunden ist, und
eine Übertragungsfunktion der Reglereinrichtung (225, 325) einen konjugiert komplexen Pol bei einer Reglerkreisfrequenz $\omega_r$ in der s-Ebene oder einen Pol bei $e^{\pm j\omega_r T}$ in der z-Ebene aufweist, wobei T die Abtastzeit eines diskreten Eingangssignals der Reglereinrichtung (225. 325) und $\omega_r$ größer 0 ist.

## Claims

1. A control device comprising
a sensor unit (170) suitable for outputting a measurement signal representing a deflection of an oscillator (190) along a direction of excitation,
an actuator unit (180) acting on the oscillator (190), which is controllable by control signals, **characterized by**
a controller main unit (200) which is configured to deduce from the measurement signal and a harmonic set point signal a control signal for the actuator unit (180) such that the actuator unit (180) counteracts a deviation of the deflection of the oscillator (190) from a set amplitude of a harmonic resonance oscillation of the oscillator (190), and
a controller extension unit (600) which is configured to determine at deactivated actuator unit (180) from the measurement signal an actual-phase and an actual-amplitude of a residual oscillation of the oscillator (190) and to output to the controller main unit (200) a harmonic set point signal adapted to the actual-phase and the actual-amplitude such that after activating the actuator unit (180) an amplitude of the residual oscillation of the oscillator (190) is amplified phase-synchronously up to the set amplitude and such that in this process energy contained in the residual oscillation is used.

**2.** The control device according to claim 1, **characterized in that** the controller main unit (200) is a controller device (225, 325) for harmonic set point signals, wherein the controller device (225, 325) comprises at least one proportional transfer element (224, 324) and one integrating transfer element (222, 322) arranged parallel to the proportional transfer element (224, 324) and a controller input of the controller main unit (200) is connected with both transfer elements (222, 224, 322, 324), and **that** a transfer function of the controller device (225, 325) has a conjugate complex pole at a controller angular frequency $\omega_r$ in the s-plane or a pole at $e^{\pm j\omega_r T}$ in the z-plane, wherein T is the sampling time of a discrete input signal of the controller device (225, 325) and $\omega_r$ is larger than 0.

**3.** The control device according to claim 2, **characterized in that** an integral action coefficient of the integrating transfer element (222, 322) and an amplification factor of the proportional transfer element (224, 324) are chosen such that the controller device (225, 325) is suitable for generating, at admission with a harmonic input signal of the controller angular frequency $\omega_r$ modulated by the step function at the controller input, a harmonic oscillation of the controller angular frequency $\omega_r$ with rising amplitude at the controller output.

**4.** The control device according to claim 3, **characterized in that** the integral action coefficient and the amplification factor are chosen such that the zeros of the transfer function of the controller device (225, 325) compensate poles of a transfer function of the oscillator (190).

**5.** The control device according to one of claims 1 to 4, **characterized in that** the controller extension unit (600) comprises:

a capturing unit (610), which is configured to determine from the measurement signal the actual-phase and the actual-amplitude of the residual oscillation of the oscillator (190) and to determine from the actual-phase and the actual-amplitude synchronisation information for the harmonic set point signal such that by the actuator unit (180) an amplitude of the residual oscillation of the oscillator (190) is amplified phase-synchronously and that the energy contained in the residual oscillation is usable; and
a synchronisation unit (620), configured to receive the synchronisation information and to determine based on the synchronisation information a phase and an initial amplitude value for the harmonic set point signal.

**6.** The control device according to claim 5, **characterized in that** the capturing unit (610) comprises:

a filter unit (612) which is configured to determine from the measurement signal, from an estimation value for the current oscillation frequency, from an estimation value for the variance of a measurement noise contained in the measurement signal, and from an estimation value for a constant amplitude offset of the measurement signal estimation values for a variation in time of the residual oscillation; and
a control unit (616) which is configured to determine from the estimation values for the variation in time of the residual oscillation the synchronisation information describing the actual phase and the actual amplitude and to output it.

**7.** The control device according to claim 6, **characterized in that** the control unit (616) is configured to deactivate after output of the synchronisation information the filter unit (612).

**8.** The control device according to any one of claims 6 or 7, **characterized in that** the control unit (616) is configured to activate after output of the synchronisation information the actuator unit (180).

**9.** The control device according to any one of claims 6 to 8, **characterized in that** the controller extension unit (600) is configured to increase the amplitude of the set point oscillation within a predetermined time period form the initial amplitude value to a set amplitude value.

**10.** The control device according to any one of claims 1 to 9, **characterized in that** the filter unit (612) is a Kalman filter.

**11.** The control device according to any one of claims 1 to 10, **characterized in that** the controller extension unit (600) comprises a frequency storage unit (630), which is configured to store in temporal intervals frequency information, which describes a current oscillation frequency of the oscillator (190), and

**that** the controller extension unit (600) is further configured to use the stored frequency information for estimating the actual-phase and the actual-amplitude of the residual oscillation of the oscillator (190) and/or for generating the harmonic set point signal.

12. The control device according to any one of claims 1 to 11, **characterized in that**
the control device is part of a rotation rate sensor (500, 505), which forms oscillators as an excitation unit (590), a Coriolis unit (585) or a detection unit (580), and that the actuator unit is a force transmitter (561),
the Coriolis unit (585) is attached to the excitation unit (590) such that the Coriolis unit (585) follows a movement of the excitation unit (590) along the direction of excitation and that the Coriolis unit (585) is additionally movable along a detection direction orthogonal to the direction of excitation, and
the detection unit (580) is attached such to the excitation unit (590) or to the Coriolis unit (585) that the detection unit (580) either
follows a movement of the excitation unit (590) along the direction of excitation and it is additionally movable along a detection direction orthogonal to the direction of excitation, or
follows a movement of the Corolis unit (585) along a detection direction orthogonal to the direction of excitation and is fixed along the direction of excitation.

13. A rotation rate sensor, comprsing
a moveably supported oscillator (190) which is excitable in a direction of excitation to a harmonic resonance oscillation,
a sensor unit (170) suitable for outputting a measurement signal representing a deviation of the oscillator (190) along the direction of excitation,
an actuator unit (180) acting on the oscillator (190) which is controllable by control signals, **characterized by**
a controller main unit (200) configured to deduce from the measurement signal and a harmonic set point signal a control signal for the actuator unit (180) such that the actuator unit (180) counteracts a deviation of deflection of the oscillator (190) from a set amplitude of a resonance oscillation, and
a controller extension unit (600) configured to determine at deactivated actuator unit (180) from the measurement signal an actual-phase and an actual-amplitude of a residual oscillation of the oscillator (190) and to output to the controller main unit (200) a harmonic set point signal adapted to the actual-phase and the actual-amplitude such that after activating the actuator unit (180) an amplitude of the residual oscillation of the oscillator (190) is amplified phase-synchronously up to a set amplitude and that in this process energy contained in the residual oscillation is used.

14. The rotation rate sensor according to claim 13, wherein
the oscillator is an excitation unit (590), which is deflectable by a force transmitter (561) along a direction of excitation and is suitable for an oscillation with a resonance angular frequency $\omega_0$.

15. A method for operating a control device with harmonic command variables, comprising
generating of a measurement signal representing a deflection of an oscillator (190) along a direction of excitation by means of a sensor unit (170),
generating of a phase and amplitude synchronous harmonic set point signal based on an estimation of an actual-phase and an actual-amplitude of a residual oscillation of the oscillator (190) at deactivated actuator unit (180),
generating of a synchronized control signal for an actuator unit (180) from the measurement signal and the phase and amplitude synchronous harmonic set point signal such that the actuator unit (180) counteracts the deviations of the oscillator (190) from a harmonic oscillation, and
activating of the actuator unit (180) at or after providing the synchronized control signal.

16. The rotation rate sensor according to claim 13, **characterized in**
**that** the controller main unit (200) is a controller device (225, 325) for harmonic set point signals, wherein the controller device (225, 325) comprises at least a proportional transfer element (224, 324) and a integrating transfer element (222, 322) arranged parallel to the proportional transfer element (224, 324) and a controller input of the controller main unit (200) is connected to both transfer elements (222, 224, 322, 324), and
**that** a transfer function of the controller device (225, 325) has a conjugate complex pole at a resonance angular frequency $\omega_r$ in the s-plane or a pole at $e^{\pm j\omega_r T}$ in the z-plane, wherein T is the sampling time of a discrete input signal of the controller device (225, 325) and $\omega_r$ is larger than 0.

**Revendications**

1. Dispositif de régulation comprenant
une unité de capteur (170) qui est conçue pour émettre un signal de mesure représentant une déviation d'un oscillateur (190) le long d'un sens d'excitation,
une unité d'actionneur (180) qui agit sur l'oscillateur (190) et qui est apte à être commandée par des signaux de commande, **caractérisé par**
une unité principale de régulateur (200) qui est conçue pour dériver du signal de mesure et d'un signal de valeur théorique harmonique un signal de commande pour l'unité d'actionneur (180) de telle sorte que ladite unité d'actionneur (180) agisse à l'encontre d'un écart de la déviation de l'oscillateur (190) par rapport à une amplitude théorique d'une oscillation de résonance harmonique de l'oscillateur (190), et
une unité d'extension de régulateur (600) qui est conçue pour définir à partir du signal de mesure, alors que l'unité d'actionneur (180) est désactivée, une phase réelle et une amplitude réelle d'une oscillation résiduelle de l'oscillateur (190), et pour transmettre à l'unité principale de régulateur (200) un signal de valeur théorique harmonique adapté à la phase réelle et à l'amplitude réelle, de sorte qu'après l'activation de l'unité d'actionneur (180), une amplitude de l'oscillation résiduelle de l'oscillateur (190) est amplifiée en synchronisation de phase jusqu'à une amplitude théorique, l'énergie contenue dans l'oscillation résiduelle étant utilisée.

2. Dispositif de régulation selon la revendication 1, **caractérisé en ce que** l'unité principale de régulateur (200) est un dispositif de régulateur (225, 325) pour des signaux de valeur théorique harmoniques, étant précisé que le dispositif de régulation (225, 325) comprend au moins un élément de transmission proportionnel (224, 324) et un élément de transmission intégrateur (222, 322) disposé parallèlement à l'élément de transmission proportionnel (222, 324), et qu'une entrée de régulateur de l'unité principale de régulateur (200) est reliée aux deux éléments de transmission (222, 224, 322, 324), et
une fonction de transmission du dispositif de régulateur (225, 325) comporte un pôle complexe conjugué avec une fréquence angulaire $\omega_r$ dans le plan s, ou un pôle pour $e^{\pm\omega,T}$ dans le plan z, T désignant le temps d'échantillonnage d'un signal d'entrée discret du dispositif de régulateur (225, 325), et $\omega_r$ étant supérieur à 0.

3. Dispositif de régulation selon la revendication 2, **caractérisé en ce qu'**un coefficient d'action par intégration de l'élément de transmission intégrateur (222, 322) et un facteur d'amplification de l'élément de transmission proportionnel (224, 324) sont choisis de telle sorte que le dispositif de régulateur (225, 325) soit conçu pour produire, lors d'une sollicitation avec un signal d'entrée harmonique de la fréquence angulaire $\omega_r$ modulé par la fonction échelon à l'entrée de régulateur, une oscillation harmonique de la fréquence angulaire $\omega_r$ avec une amplitude croissante à une sortie de régulateur.

4. Dispositif de régulation selon la revendication 3, **caractérisé en ce que** le coefficient d'action par intégration et le facteur d'amplification sont choisis de telle sorte que les points zéro de la fonction de transmission du dispositif de régulateur (225, 325) compensent des pôles d'une fonction de transmission de l'oscillateur (190).

5. Dispositif de régulation selon l'une des revendications 1 à 4, **caractérisé en ce que** l'unité d'extension de régulateur (600) comporte :

   une unité d'enregistrement (610) qui est conçue pour définir, à partir du signal de mesure, la phase réelle et l'amplitude réelle de l'oscillation résiduelle de l'oscillateur (190) et pour définir, à partir de la phase réelle et de l'amplitude réelle, une information de synchronisation pour le signal de valeur théorique harmonique de telle sorte que grâce à l'unité d'actionneur (180) une amplitude de l'oscillation résiduelle de l'oscillateur (190) soit amplifiée en synchronisation de phase et que l'énergie contenue dans ladite oscillation résiduelle devienne utilisable ; et
   une unité de synchronisation (620) qui est conçue pour recevoir l'information de synchronisation et pour fixer, sur la base de ladite information de synchronisation, une phase et une valeur d'amplitude initiale du signal de valeur théorique harmonique.

6. Dispositif de régulation selon la revendication 5, **caractérisé en ce que** l'unité d'enregistrement (610) comporte :

   une unité de filtre (612) qui est conçue pour rechercher, à partir du signal de mesure, d'une valeur estimée pour la fréquence d'oscillation momentanée, d'une valeur estimée pour la variance d'un bruit de mesure contenu dans le signal de mesure, et d'une valeur estimée pour un décalage d'amplitude constant du signal de mesure, des valeurs estimées pour une courbe dans le temps de l'oscillation résiduelle ; et

une unité de commande (616) qui est conçue pour rechercher et émettre, à partir des valeurs estimées pour la courbe dans le temps de l'oscillation résiduelle, l'information de synchronisation décrivant la phase réelle et l'amplitude réelle.

**7.** Dispositif de régulation selon la revendication 6, **caractérisé en ce que** l'unité de commande (616) est conçue pour désactiver l'unité de filtre (612), après l'émission de l'information de synchronisation.

**8.** Dispositif de régulation selon l'une des revendications 6 ou 7, **caractérisé en ce que** l'unité de commande (616) est conçue pour activer l'unité d'actionnement (180), après l'émission de l'information de synchronisation.

**9.** Dispositif de régulation selon l'une des revendications 6 à 8, **caractérisé en ce que** l'unité d'extension de régulateur (600) est conçue pour augmenter l'amplitude de l'oscillation de valeur théorique, à l'intérieur d'un laps de temps prédéfini, pour la faire passer de la valeur d'amplitude initiale à une valeur d'amplitude théorique.

**10.** Dispositif de régulation selon l'une des revendications 1 à 9, **caractérisé en ce que** l'unité de filtre (612) est un filtre de Kalman.

**11.** Dispositif de régulation selon l'une des revendications 1 à 10, **caractérisé en ce que**
l'unité d'extension de régulateur (600) comprend une unité de stockage de fréquence (630) qui est conçue pour stocker périodiquement une information de fréquence décrivant une fréquence d'oscillation actuelle de l'oscillateur (190), et
l'unité de complément de régulateur (600) est également conçue pour utiliser l'information de fréquence stockée pour estimer la phase réelle et l'amplitude réelle de l'oscillation résiduelle de l'oscillateur (190) et/ou pour générer le signal de valeur théorique harmonique.

**12.** Dispositif de régulation selon l'une des revendications 1 à 11, **caractérisé en ce que**
le dispositif de régulation fait partie d'un capteur de vitesse de rotation (500, 505), l'oscillateur est conçu comme une unité d'excitation (590), une unité de Coriolis (585) ou une unité de détection (580), et l'unité d'actionnement est un générateur de force (561),
l'unité de Coriolis (585) est fixée à l'unité d'excitation (590) de telle sorte que l'unité de Coriolis (585) suive un mouvement de l'unité d'excitation (590) le long du sens d'excitation et soit en supplément mobile le long d'un sens de détection perpendiculaire au sens d'excitation, et
l'unité de détection (580) est fixée à l'unité d'excitation (590) ou à l'unité de Coriolis (585) de telle sorte que l'unité de détection (580) ou bien
suive un mouvement de l'unité d'excitation (590) le long du sens d'excitation et soit en supplément mobile le long d'un sens de détection perpendiculaire au sens d'excitation, ou bien
suive un mouvement de l'unité de Coriolis (585) le long d'un sens de détection perpendiculaire au sens d'excitation et soit fixe le long du sens d'excitation.

**13.** Capteur de vitesse de rotation comprenant
un oscillateur (190), monté mobile, qui est apte à être excité en vue d'une oscillation de résonance harmonique dans un sens d'excitation,
une unité de capteur (170) qui est conçue pour émettre un signal de mesure représentant une déviation de l'oscillateur (190) le long du sens d'excitation,
une unité d'actionneur (180) qui agit sur l'oscillateur (190) et qui est apte à être commandée par des signaux de commande, **caractérisé par**
une unité principale de régulateur (200) qui est conçue pour dériver du signal de mesure et d'un signal de valeur théorique harmonique un signal de commande pour l'unité d'actionneur (180) de telle sorte que ladite unité d'actionneur (180) agisse à l'encontre d'un écart de la déviation de l'oscillateur (190) par rapport à une amplitude théorique de l'oscillation de résonance, et
une unité d'extension de régulateur (600) qui est conçue pour définir à partir du signal de mesure, alors que l'unité d'actionneur (180) est désactivée, une phase réelle et une amplitude réelle d'une oscillation résiduelle de l'oscillateur (190), et pour transmettre à l'unité principale de régulateur (200) un signal de valeur théorique harmonique adapté à la phase réelle et à l'amplitude réelle, de sorte qu'après l'activation de l'unité d'actionneur (180), une amplitude de l'oscillation résiduelle de l'oscillateur (190) est amplifiée en synchronisation de phase jusqu'à une amplitude théorique, l'énergie contenue dans l'oscillation résiduelle étant utilisée.

**14.** Capteur de vitesse de rotation selon la revendication 13, étant précisé que l'oscillateur est une unité d'excitation (590) qui est déviée par un générateur de force (561) le long d'un sens d'excitation et qui est conçue pour une oscillation à une fréquence angulaire $\omega_0$.

**15.** Procédé pour faire fonctionner un dispositif de régulation avec une grandeur de réglage harmonique, comprenant la production d'un signal de mesure représentant une déviation d'un oscillateur (190) le long d'un sens d'excitation, à l'aide d'une unité de capteur (170),
la production d'un signal de valeur théorique harmonique en synchronisation de phase et d'amplitude sur la base d'une estimation d'une phase réelle et d'une amplitude réelle d'une oscillation résiduelle de l'oscillateur (190) alors que l'unité d'actionneur (180) est désactivée,
la production d'un signal de commande synchronisé pour une unité d'actionneur (180) à partir du signal de mesure et du signal de valeur théorique harmonique en synchronisation de phase et d'amplitude de telle sorte que ladite unité d'actionneur (180) agisse à l'encontre de l'écart de l'oscillateur (190) par rapport à une oscillation harmonique, et l'activation de l'unité d'actionnement (180) avec ou après la fourniture du signal de commande synchronisé.

**16.** Capteur de vitesse de rotation selon la revendication 13, **caractérisé en ce que**
l'unité principale de régulateur (200) est un dispositif de régulateur (225, 325) pour des signaux de valeur théorique harmoniques, étant précisé que le dispositif de régulation (225, 325) comprend au moins un élément de transmission proportionnel (224, 324) et un élément de transmission intégrateur (222, 322) disposé parallèlement à l'élément de transmission proportionnel (222, 324), et qu'une entrée de régulateur de l'unité principale de régulateur (200) est reliée aux deux éléments de transmission (222, 224, 322, 324), et
une fonction de transmission du dispositif de régulateur (225, 325) comporte un pôle complexe conjugué avec une fréquence angulaire $\omega_r$ dans le plan s, ou un pôle pour $e^{\pm j\omega_r T}$ dans le plan z, T désignant le temps d'échantillonnage d'un signal d'entrée discret du dispositif de régulateur (225, 325), et $\omega_r$ étant supérieur à 0.

# Fig. 1

# Fig. 2A

# Fig. 2B

## Fig. 3A

$$\frac{K_I}{K_P} \approx s_0 \qquad vz = sign(K_I)$$

$$(T_S + T_R) \cdot \omega_0 = \frac{3}{2}\pi \quad f\ddot{u}r \quad vz = +1$$

$$(T_S + T_R) \cdot \omega_0 = \frac{1}{2}\pi \quad f\ddot{u}r \quad vz = -1$$

## Fig. 3B

# Fig. 4A

$$\frac{K_I}{K_P} \approx s_0 \qquad vz = sign(K_I)$$

$$\left(\beta_S + \beta_D + \frac{1}{2}\right) \cdot \omega_0 \cdot T = \frac{3}{2}\pi \quad f\ddot{u}r \quad vz = +1$$

$$\left(\beta_S + \beta_D + \frac{1}{2}\right) \cdot \omega_0 \cdot T = \frac{1}{2}\pi \quad f\ddot{u}r \quad vz = -1$$

# Fig. 4B

## Fig. 5A

## Fig. 5B

## Fig. 6A

500

542

541          541

561                                    561

562

580                              590      502
                                          501

571                                    571

572

551

## Fig. 6B

571    580    590    572    580    590    571

550

# Fig. 6C

# Fig. 7

505

## Fig. 8

Erzeugen eines Messsignals,
das eine Auslenkung eines Schwingers
abbildet — 802

Erzeugen eines zu einer Restschwingung
des Schwingers synchronisierten,
harmonischen Sollwertsignals — 804

Erzeugen eines zu der Restschwingung
des Schwingers synchronisierten,
harmonischen Steuersignals und
Aktivieren einer durch das Steuersignal
gesteuerten Aktuatoreinheit — 806

**IN DER BESCHREIBUNG AUFGEFÜHRTE DOKUMENTE**

**In der Beschreibung aufgeführte Patentdokumente**

- EP 2336717 A
- DE 102010055631